# EUROPÄISCHE PATENTSCHRIFT

(11) **EP 2 651 669 B1**
(45) Veröffentlichungstag und Bekanntmachung des Hinweises auf die Patenterteilung: **23.05.2018**
(21) Anmeldenummer: 11787617.7
(22) Anmeldetag: 22.11.2011
(51) Int. Cl.: B60G 17/052, B01D 53/26, F04B 39/12, F04B 39/16, F16K 31/06, F04B 17/03

(54) **DRUCKLUFTVERSORGUNGSANLAGE UND PNEUMATISCHES SYSTEM**
AIR SUPPLY SYSTEM AND PNEUMATIC SYSTEM
SYSTÈME D'ALIMENTATION D'AIR ET SYSTÈME PNEUMATIQUE

(30) Priorität: 16.12.2010 DE 102010054704
(43) Veröffentlichungstag der Anmeldung: 23.10.2013
(73) Patentinhaber: WABCO GmbH, 30453 Hannover (DE)
(72) Erfinder: FRANK, Dieter, 30171 Hannover (DE); MEISSNER, Frank, 30453 Hannover (DE)
(74) Vertreter: Lauerwald, Jörg
(86) Internationale Anmeldenummer: PCT/EP2011/005864
(87) Internationale Veröffentlichungsnummer: WO 2012/079689

(56) Entgegenhaltungen:
- DE-A1- 19 535 972
- JP-A- 2006 095 471
- JP-A- 2008 163 843
- JP-U- 63 043 629
- JP-U- 63 130 125
- JP-U- 63 130 126
- JP-U- 63 176 528
- US-A- 5 129 927
- US-A- 5 711 150

## Beschreibung

Die Erfindung betrifft eine Druckluftversorgungsanlage gemäß dem Oberbegriff des Anspruchs 1. Weiter betrifft die Erfindung ein pneumatisches System mit einer solchen Druckluftversorgungsanlage gemäß Anspruch 15.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Rahmen eines Druckniveaus von 5 bis 20 bar, betrieben. Die Druckluft wird mit einem Luftverdichter (Kompressor) der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann durch Ablassen von Luft die Druckluftversorgungsanlage und/oder Pneumatikanlage zum Entlüftungsanschluss hin entlüftet werden. Die US 5 129 927 A beschreibt ein Fahrzeug-Luftfedersystem mit einem Kompressor und Lufttrockner. wobei das Entlüftungsventil des Luftfedersystems von außen an das Gehäuse des Lufttrockners angeflanscht ist.

Die JP 2008 163843 A beschreibt einen Luftkompressor mit einem separaten Lufttrockner in einem teilkreisförmigen Gehäuse, welches ein elektrisch angesteuertes Entlüftungsventil zumindest teilweise umgibt und an einen äußeren Anschluss des Gehäuses des Lufttrockners angeschlossen ist.

Die JP 63 176528 U beschreibt ein Fahrzeug-Luftfedersystem mit einem Kompressor und Lufttrockner, wobei ein Magnetventil des Luftfedersystems zumindest teilweise in dem Gehause des Lufttrockners außerhalb des Trockenbehälters angeordnet ist.

Zur Sicherstellung eines langfristigen Betriebs der Druckluftversorgungsanlage weist diese einen Lufttrockner auf, mit dem die Druckluft zu trocknen ist. Dadurch wird die Ansammlung von Feuchtigkeit im Pneumatiksystem vermieden, die ansonsten bei vergleichsweise niedrigen Temperaturen zu ventilschädigender Kristallbildung und sonstigen unerwünschten Effekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung - bei vergleichsweise hohem Druck - in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus - bei vergleichsweise niedrigem Druck - mit der getrockneten Druckluft aus dem Luftfederungssystem im Gegenstrom oder Gleichstrom relativ zur Befüllrichtung durchströmt wird. Dazu kann die Entlüftungsventilanordnung geöffnet werden. Für eine solche - auch als Druckwechseladsorption bezeichnete - Anwendung hat es sich als wünschenswert erwiesen, eine Druckluftversorgungsanlage flexibel und gleichzeitig verlässlich auszulegen. Insbesondere soll eine vergleichsweise schnelle Entlüftung mit einem dennoch für eine Regeneration des Lufttrockners ausreichendem Druckwechsel, zu ermöglicht sein.

Ein Magnetventil zur Realisierung einer Mehrfachfunktion kann mit wenigstens drei angeschlossenen Pneumatikkammern - nämlich zur pneumatischen Kontaktierung funktionell unterschiedlicher, immer separater und mit unterschiedlichen Druckbeaufschlagungen versehenen Pneumatikkammern - mit zwei mechanisch getrennten Hubankern in einer gemeinsamen Erregerwicklung des Magnetventils realisiert werden. Jeder der Hubanker ist dabei jeweils einer anderen separaten Pneumatikkammer zugeordnet. Grundsätzlich ist ein solches Doppelanker-Magnetventil beispielsweise aus DE 201 60 30 oder aus Anmeldungen der Anmelderin, wie beispielsweise DE 35 01 708 A1 oder DE 10 2006 041 010 A1 bekannt. Die grundsätzliche Funktionsweise eines Doppelanker-Magnetventils ist beispielsweise der Anmeldung der Anmelderin DE 10 2004 035 763 A1 zu entnehmen.

Aus DE 35 429 74 A1 der Anmelderin ist eine Niveauregeleinrichtung für Fahrzeuge mit Luftfiltern bekannt, mit der in Abhängigkeit von der Fahrzeugbelastung ein vorgegebener Abstand der Fahrzeugzelle von der Fahrzeugachse durch Auffüllen oder Entleeren der Luftfedern aufrechterhalten werden kann. Die Einrichtung enthält ein mit dem Druck in den Luftfedern steuerbares Sicherheitsventil. Eine solche eingangs genannte Druckluftversorgungsanlage ist noch verbesserbar.

DE 199 11 933 B4 offenbart einen Drucklufterzeuger mit einem Lufttrockner mit einer ersten Druckluftversorgungsleitung, wobei die Druckluft durch ein Trockenmittel geleitet wird, und mit einer zweiten Druckluftversorgungsleitung ohne dass die Druckluft durch das Trockenmittel geleitet wird.

Eine eingangs genannte Druckluftversorgungsanlage ist auch in EP 1 165 333 B2 im Rahmen eines eingangs genannten pneumatischen Systems mit einer Luftfederanlage offenbart. Diese weist neben einer separat absperrbaren Hauptentlüftungsleitung eine Hochdruckentlüftungsleitung mit einem zusätzlichen Hochdruckentlüftungsventil neben dem mit einem Steuerventil pneumatisch angesteuerten Hauptentlüftungsventil in der Hauptentlüftungsleitung auf und die zur Hauptentlüftungsleitung parallel geschaltet ist. Der freie Durchströmquerschnitt des separaten Hochdruckentlüftungsventils ist geringer als derjenige des Hauptentlüftungsventils. Eine solche Druckluftversorgungsanlage ist noch verbesserbar. Es hat sich gezeigt, dass bei Entlüftung einer solchen Druckluftversorgungsanlage über die Hochdruckentlüftungsleitung die Entlüftung von trockener Luft erfolgt, welche nicht für die Regeneration des Trockenmittels verwendet wird. Dies kommt einer unnötigen Verschwendung von trockener Luft gleich, insbesondere für den Fall, dass eine für obige Anwendungen geeignete, flexible, schnelle und dennoch verlässliche Betätigung der Druckluftversorgungsanlage mit entsprechend hoher Betätigungsrate erforderlich sein sollte. Über das mit vergleichsweise kleiner Nennweite versehene Steuerventil kann zwar ein mit vergleichsweise großer Nennweite auslegbares Hauptentlüftungsventil pneumatisch vorgesteuert werden. Allerdings ist eine solche zur indirekten Schaltung eines Druckvolumens ausgelegte Anordnung vergleichsweise aufwändig.

Aus EP 1 233 183 B1 ist eine Druckluftregeleinrichtung mit einem Lufttrockner bekannt, in dessen Gehäuse ein topfförmiger Trockenbehälter enthalten ist, dessen Inneres über das Gehäuse einerseits mit einer Druckmittelquelle und andererseits mit einem Anschlusselement in Form eines Druckspeichers und/oder einer Luftfeder über ein zu diesen öffnendes Ventil verbindbar ist. Das Gehäuse weist einen Lufteinlass und einen Luftauslass jeweils für die Druckluft auf, die zum Füllen des mindestens einen Anschlusselements in einer Strömungsrichtung vom Lufteinlass durch den Trockenbehälter hindurch zum Luftauslass geführt wird. Zum Entleeren wird diese in entgegengesetzter Strömungsrichtung vom Luftauslass her durch den Trockenbehälter und das Gehäuse und aus letzterem abgeführt. Ein steuerbares Wegeventil ist in das Gehäuse des Lufttrockners integriert und eingebaut, das beim Entleeren zum Einlass der Luft in das Gehäuseinnere und den Trockenbehälter dient. Ein den Abführkanal steuerndes Wegeventil wird von mindestens einem weiteren steuerbaren Wegeventil mit dem Druck beim Entleeren angesteuert. Dieses Wegeventil ist im Wesentlichen außerhalb des Gehäuses des Lufttrockners angeordnet.

Aus DE 32 16 329 C2 ist eine von einem Kompressor aufladbare einen Druckluftvorratsbehälter aufweisende Druckluftanlage mit einem Auslassventil bekannt, wobei in einer Rückströmleitung zwischen dem Druckluftvorratsbehälter einerseits und dem ein Trockenmittel enthaltenen Behälter sowie dem Auslassventil andererseits ein Druckrückhalteventil vorgesehen ist. Das Auslassventil und ein dieses regelnder Druckregler sind mit einer hohlen Stange durch den das Trockenmittel enthaltenen Behälter des Lufttrockners hindurchführend verbunden.

Solche und andere vorbekannte Lösungen für einen Lufttrockner haben sich als vergleichsweise bauraumintensiv erwiesen. Wünschenswert wäre es, eine Druckluftversorgungsanlage mit einer Entlüftungsventilanordnung und einem Lufttrockner möglichst platzsparend einzurichten.

An dieser Stelle setzt die Erfindung an, deren Aufgabe es ist, eine vereinfachte Druckluftversorgungsanlage zum Betreiben einer Pneumatikanlage anzugeben, die vergleichsweise bauraumsparend ausgelegt, insbesondere hinsichtlich des Standes der Technik verbessert ist. Insbesondere soll eine Entlüftungsventilanordnung und ein Lufttrockner der Druckluftversorgungsanlage möglichst kompakt zueinander angeordnet sein. Insbesondere soll eine Entlüftungs- und/oder Trockenleistung der Druckluftversorgungsanlage verbessert sein. Insbesondere soll eine Akustik der Druckluftversorgungsanlage vor allem für den Fall einer Entlüftung verbessert sein. Aufgabe der Erfindung ist es ebenso, ein vorteilhaft gestaltetes pneumatisches System mit der Druckluftversorgungsanlage anzugeben.

Betreffend die Druckluftversorgungsanlage wird die Aufgabe durch die Erfindung mittels einer Druckluftversorgungsanlage der eingangs genannten Art gelöst, bei welcher erfindungsgemäß die Merkmale des kennzeichnenden Teils des Anspruchs 1 vorgesehen sind. Die Erfindung führt auf ein pneumatisches System des Anspruchs 15 mit einer erfindungsgemäßen Druckluftversorgungsanlage.

Die Erfindung geht von der Überlegung aus, dass die Anordnung der Entlüftungsventilanordnung zum Trockenbehälter des Lufttrockners bei einer Druckluftversorgungsanlage noch Potential bietet, um Bauraum einzusparen. Bisher aus dem Stand der Technik vorbekannte Lösungen sehen eine Entlüftungsventilanordnung grundsätzlich außerhalb eines Trockenbehälters des Lufttrockners vor. Die Erfindung hat erkannt, dass sich ein Trockenbehälter des Lufttrockners vorteilhaft ausbilden lässt, um eine Entlüftungsventilanordnung wenigstens teilweise in einem für den Trockenbehälter vorgesehenen Bauraum unterzubringen. Erfindungsgemäß ist dazu vorgesehen, dass der Trockenbehälter eine eine trockenmittelfreie Einbuchtung bildende Wandung aufweist und die Entlüftungsventilanordnung wenigstens teilweise in der Einbuchtung angeordnet ist. Eine Berandung der Einbuchtung wird insbesondere von einer nach außen gerichteten Seite (also von einer von dem Granulat im Trockenbehälter abgewandten Seite der Wandung) der Wandung des Trockenbehälters gebildet.

Die Erfindung hat erkannt, dass sich diese bauraumsparende Maßnahme ohne Funktionseinbuße für den Lufttrockner oder die Entlüftungsventilanordnung vornehmen lässt bzw. sich vielmehr zum vorteilhaften synergetischen Betrieb des Lufttrockners und der Entlüftungsventilanordnung nutzen lässt. Mit Vorteil versehen lässt sich eine Entlüftungsventilanordnung aufgrund der Anbringung praktisch innerhalb einer im wesentlichen zylindrischen Bauraumkontur des Trockenbehälters kompakt realisieren. Die durch die Wandung gebildete Einbuchtung verläuft innerhalb der zylindrischen Bauraumkontur. Mit anderen Worten ist in der Bauraumkontur ein durch die Einbuchtung gebildeter Freiraum geschaffen, in den die Magnetventilanordnung wenigstens teilweise eingebracht ist. Der somit die Magnetventilanordnung schützend umgebende Trockenbehälter übt vorteilhaft eine die Akustik verbessernde Funktion aus. Außerdem hat die Erfindung erkannt, dass sich aufgrund der vorteilhaften Anordnung der Magnetventilanordnung in einem von der Wandung des Trockenbehälters umgebenen Bereich eine Abwärme der Entlüftungsventilanordnung zur Trocknung des Granulats nutzen lässt. Insgesamt ist die Druckluftversorgungsanlage kompakter und effizienter ausgestaltet als dies im Stand der Technik bekannte Anlagen.

Besonders vorteilhaft wird das Konzept der Erfindung dadurch realisiert, dass die Entlüftungsventilanordnung mit einem Ventilgehäuse vollständig in der trockenmittelfreien Einbuchtung des Trockenbehälters angeordnet ist, d.h. bis auf Zuleitungen praktisch nicht aus der Einbuchtung herausragt. Grundsätzlich ist das Konzept der Erfindung nicht beschränkt auf eine bestimmte Art einer Entlüftungsventilanordnung - vielmehr kann ein jedes zweckmäßig geeignete Entlüftungsventil (z. B. als ein einzelnes Entlüftungsventil oder als Teil einer Entlüftungsventilanordnung mit mehreren Entlüftungsventilen) mit den erfindungsgemäßen Vorteilen versehen in der trockenmittelfreien Einbuchtung des Trockenbehälters angeordnet sein. Die Entlüftungsventilanordnung ist vorteilhaft in Form einer steuerbaren Magnetventilanordnung mit einem Magnetteil und einem Pneumatikteil gebildet. Zu dem Pneumatikteil gehören insbesondere die pneumatisch wirkenden Teile wie das Ventil als solches. Der Pneumatikteil weist vorteilhaft einen mit dem Ventilkörper verbundenen Anker auf, wobei der Ventilkörper an einem Ventilsitz anschlägt und der Anker durch den Magnetteil aktivierbar ist, d. h. Teil des Magnetteils ist. Zu dem Magnetteil gehören insbesondere die elektrisch und/oder magnetisch wirkenden Teile wie Aktuier- und Steuermittel für das Ventil, wie Spule mit Anker und Spulenkörper sowie eine Steuerleitung oder dgl. Vorteilhaft ist wenigstens der Pneumatikteil und/oder der Magnetteil in der Einbuchtung angeordnet. Insbesondere hat es sich bewährt, dass wenigstens eines oder mehrere der Elemente des Pneumatikteils und/oder Magnetteils -insbesondere ein Ventilsitz, ein Ventilkörper, ein Spulenkörper, ein Anker und /oder ein Dichtelement- in der Einbuchtung angeordnet sind. Vorteilhaft ist der Pneumatikteil und/oder der Magnetteil ganz oder wenigstens teilweise in der Einbuchtung angeordnet. Vorzugsweise ist der Pneumatikteil und der Magnetteil in einem gemeinsamen Ventilgehäuse angeordnet. Das Ventilgehäuse ist vorzugsweise in der Einbuchtung angeordnet. Besonders vorteilhaft dient die die Einbuchtung bildende Wandung als Ventilgehäuse.

Es hat sich als vorteilhaft erwiesen, dass der Trockenbehälter die Magnetventilanordnung wenigstens zweiseitig, vorzugsweise dreiseitig oder - bis auf Zuleitungen - allseitig umgibt. Vorzugsweise ist der Lufttrockner, insbesondere der Trockenbehälter selbst, über Luftdurchlässe strömungsumkehrbar - d. h. bidirektional - durchströmbar.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders bevorzugten Weiterbildung ist die Einbuchtung symmetrisch zu einer Achse des Trockenbehälters angeordnet. Vorzugsweise ist die Einbuchtung parallel und/oder mittig auf der Achse des Trockenbehälters angeordnet. Dies ermöglicht auch mit vorhandener Einbuchtung eine dennoch vergleichsweise gleichmäßige und insbesondere vollständige Durchströmung des Trockengranulats im Trockenbehälter. Vorteilhaft weist die Einbuchtung einen von Druckluft durchströmbaren Kanal durch den Trockenbehälter auf. Der Kanal schließt vorteilhaft an einen der Entlüftungsventilanordnung vorgeordneten einbautenfreien Freiraum an. Vorzugsweise ist der Freiraum und die Entlüftungsventilanordnung axial zueinander angeordnet. Der vorgenannte weiterbildende Aufbau sieht im Prinzip eine Funktionsaufteilung des Trockenbehälters in axialer und radialer Richtung vor. Insbesondere weist der Trockenbehälter zum einen in einem um eine Achse geführten ringartigen radial außen liegenden Mantelbereich ein Behältervolumen mit dem Trockengranulat auf. Das Behältervolumen ist insbesondere gleichmäßig von einer Entlüftungsströmung P und/oder einer Versorgungsströmung *P̅* durchströmbar. In einem vom ringartigen Mantelbereich umgebenen achsnahen, insbesondere mittigen, Bereich ist die trockenmittelfreie Einbuchtung einerseits und der der trockenmittelfreien Einbuchtung vorgeordnete einbautenfreie Freiraum gebildet. Dadurch ergibt sich zum einen ein vergleichsweise guter Schutz für die Magnetventilanordnung. Letztere Anordnung von Einbuchtung und Freiraum entlang einer Achse bildet mit dem einbautenfreien Freiraum -in Richtung einer Entlüftungsströmung P vor der Einbuchtung- eine an die Druckluftzuführung bzw. an eine Druckquellen-Schnittstelle sich anschließende Strecke, die zur Vergleichmäßigung und/oder Abkühlung einer Druckluftströmung dient bevor eine Beaufschlagung der Magnetventilanordnung erfolgt.

Die Magnetventilanordnung ist bevorzugt zur direkten Schaltung eines gesamten Druckluftvolumens ausgelegt. Insbesondere ist die Magnetventilanordnung dazu frei von einem Steuerventil. Es hat sich gezeigt, dass eine direkte Schaltung eines gesamten Druckluftvolumens in vergleichsweise kurzer Zeit erfolgen kann - die Druckluftversorgungsanlage ermöglicht so ein vergleichsweise schnelles Entlüften der Pneumatikanlage. Dies ist vorteilhaft insbesondere für SUVs und sonstige sportive Fahrzeuge. Diese benötigen gegebenenfalls ein vergleichsweise schnelles Ändern einer Bodenfreiheit oder einer sonstigen Fahrwerkeinstellung benötigen. Außerdem kann ein vergleichsweise schnelles Entlüften der Druckluftversorgungsanlage für eine Regeneration des Lufttrockners förderlich sein.

Grundsätzlich ist es im Rahmen des Konzepts der Erfindung darüber hinaus auch möglich, die Entlüftungsventilanordnung als eine indirekt vorgesteuerte Magnetventilanordnung auszubilden. Zur indirekten Schaltung eines Druckluftvolumens ist ein Steuerventil und ein Relaisventil vorgesehen. Eine indirekt vorgesteuerte Magnetventilanordnung kann für eine bevorzugte Schnellentlüftung ausgebildet sein, indem ein einem Teildruck ausgesetztes Steuerventil zur Steuerung des Relaisventils ausgebildet ist. Eine andere Möglichkeit besteht darin, das Steuerventil einem Gesamtdruck des Druckluftvolumens auszusetzen und das so beaufschlagte Steuerventil zur Steuerung des Relaisventils vorzusehen. Dies führt zu einer sogenannten Normalentlüftungsfunktion der indirekt vorgesteuerten Magnetventilanordnung.

In einer besonders bevorzugten ersten Variante hat es sich als vorteilhaft erwiesen, dass die Entlüftungsventilanordnung in Form einer steuerbaren Magnetventilanordnung mit einem Magnetteil und einem Pneumatikteil gebildet ist. Der Pneumatikteil weist vorteilhaft ein Primärventil und ein Sekundärventil auf. Das Primärventil und das Sekundärventil sind vorzugsweise mit einem gemeinsamen auf beide wirkenden Steuermittel, insbesondere des Magnetteils der Magnetventilanordnung, aktivierbar. In einer besonders bevorzugten Ausführungsform dieser Variante ist das Primärventil und das Sekundärventil in einem gemeinsamen Gehäuse als ein Doppelanker-Magnetventil gebildet. Bei dieser Variante kann ganz allgemein ein Ventil vorgesehen sein, dass einen ein erstes Dichtelement des Primärventils tragenden Primäranker und einen ein zweites Dichtelement des Sekundärventils tragenden Sekundäranker aufweist, wobei Primäranker und Sekundäranker in einem gemeinsamen Spulenkörper angeordnet sind.

Die Ventile der Magnetventilanordnung, insbesondere das Primärventil und Sekundärventil des Doppelanker-Magnetmagnets, können parallel oder in Reihe geschaltet, stromlos offen oder geschlossen sein - dies in beliebiger Kombination. Eine Reihenanordnung und Parallelanordnung des Primär- und Sekundärventils eignet sich für eine besonders flexibel gestaltbare zeitliche Schaltungsabfolge des Primär- und Sekundärventils, so dass unterschiedliche Nennweiten zu unterschiedlichen Zeitpunkten für die Entlüftungsleitung zur Verfügung gestellt werden können. Dadurch können Druckspitzen bei einer Entlüftung und so die Akustik vermindert, insbesondere ein Entlüftungsknall vermieden werden. Eine Parallelanordnung hat sich zusätzlich als besonders vorteilhaft für eine schrittweise Erhöhung der für die Entlüftungsleitung zur Verfügung stehenden Nennweiten erwiesen, so dass eine besonders schnelle Entlüftung dennoch unter Vermeidung eines Entlüftungsknalls erfolgen kann. Eine übermäßige Akustik bzw. ein Entlüftungsknall ist bei einem Entlüftungsvorgang immer dann zu befürchten, wenn ein zu großes Druckluftvolumen in zu kurzer Zeit, d.h. bei zu hoher Druckamplitude entlüftet wird. Andererseits ist für eine bestmögliche Regeneration des Lufttrockners eine vergleichsweise hohe Druckwechselamplitude erwünscht. Gesteigerte Effizienz hinsichtlich Entlüftung und Trocknerregeneration einerseits und eine geräuscharme Arbeitsweise andererseits können somit gegenläufige Bedingungen haben. Das zuvor beschriebene Konzept der Erfindung realisiert einen besonders vorteilhaften Kompromiss zwischen Trocknerregeneration und Entlüftungseffizienz einerseits und Akustik andererseits.

Darüber hinaus lässt sich eine verlässliche und konstruktiv vereinfachte Lösung gemäß der Erfindung dadurch realisieren, dass das Primärventil und das Sekundärventil mit einem gemeinsamen auf Primär- und Sekundärventil wirkenden Steuermittel des Magnetteils der Magnetventilanordnung aktivierbar ist. Mit anderen Worten lässt sich für das Primärventil und das Sekundärventil des Pneumatikteils praktisch ein gemeinsamer Magnetteil der Magnetventilanordnung nutzen.

Die vorgenannte erste Variante mit zwei Entlüftungsventilen ermöglicht eine besonders vorteilhafte flexible Handhabung sowohl einer Entlüftung der Druckluftversorgungsanlage bzw. Pneumatikanlage als auch einer Regeneration des Lufttrockners. Es hat sich gezeigt, dass sich durch eine vorteilhafte Anpassung der Nennweiten von Primärventil und Sekundärventil nicht nur eine Regeneration des Lufttrockners, sondern darüber hinaus eine Entlüftung der Druckluftversorgungsanlage, ohne übermäßige Akustik vorteilhaft durchführen lässt, insbesondere ein Entlüftungsknall vermeiden lässt.

In einer ebenfalls bevorzugten zweiten Variante lässt sich die Entlüftungsventilanordnung in Form einer steuerbaren Magnetventilanordnung mit einem einzigen Magnetventil bilden. Sowohl die erste als auch die zweite Variante einer vorgenannten Weiterbildung eignet sich zur direkten Schaltung oder indirekten Schaltung eines gesamten Druckluftvolumens der vorgenannten Art.

Für ein Magnetventil der Magnetventilanordnung zur Bildung der Entlüftungsventilanordnung beider vorgenannten Varianten hat sich ein Elastomerventilsitz oder ein Metallventilsitz als besonders robust und beständig erwiesen. Ein Metallventilsitz erlaubt kleine Öffnungshübe, da die Elastomereindrückung eines Elastomerventilsitzes entfällt. Dadurch kann die Magnetventilanordnung kompakt ausgeführt werden. Grundsätzlich kann ein Elastomer oder Metall auch für ein Dichtelement eines Magnetventils genutzt werden.

Im Rahmen einer besonders bevorzugten Weiterbildung ist die Druckluftversorgungsanlage in Form einer Einrichtung mit einer Gehäuseanordnung realisiert, wobei die Gehäuseanordnung eine Anzahl von Bereichen aufweist. Es hat sich gezeigt, dass die Bereiche einer Gehäuseanordnung in zweckmäßiger Weise, vorteilhaft in U-Form, zueinander angeordnet werden können. Mit besonderem Vorteil versehen ist in einem ersten Bereich ein Antrieb angeordnet. Vorteilhaft ist in einem zweiten Bereich der vom Antrieb antreibbare Luftverdichter angeordnet. Vorteilhaft ist in einem mit dem zweiten Bereich über eine Druckquellen-Schnittstelle verbundenen dritten Bereich der Lufttrockner und die Entlüftungsventilanordnung angeordnet. Insbesondere bei Nutzung einer U-förmigen Anordnung der Bereiche hat sich die Anordnung des dritten Bereichs in einem Schenkel der U-förmigen Anordnung als vorteilhaft erwiesen. Dadurch können pneumatische und/oder steuerelektrische und/oder elektrische Schnittstellen bei Einbau der Druckluftversorgungsanlage in einem Fahrzeug horizontal angeordnet werden. Grundsätzlich kann die genannte Aufteilung auch durch Anordnung des ersten bis dritten Bereichs in einer anderen als U-förmigen Anordnung, z. B. einer Z-förmigen Anordnung realisiert werden.

Vorteilhaft bildet der Trockenbehälter einen Teil der Gehäuseanordnung. Dies führt zu einer Gewichtsersparnis und zu einer Verringerung der Teilezahl bei einer Druckluftversorgungsanlage. Insbesondere ist ein dichtungsaufnehmender Deckel als Teil der Gehäuseanordnung vorgesehen, wobei der Deckel die Einbuchtung mit der darin befindlichen Magnetventilanordnung verschließt.

Darüber hinaus hat sich gezeigt, dass der Deckel zur Aufnahme von pneumatischen und/oder steuerelektrischen und/oder elektrischen Funktionsmitteln wie einer Schnittstelle, elektrischen und/oder pneumatischen Leitungen, Ventilen od. dgl. ausgebildet sein kann. Der Deckel kann insbesondere ausgebildet sein, pneumatische Schnittstellen - wie die Druckluftversorgungs-Schnittstelle und die Entlüftungs-Schnittstelle oder ein Ventil in Form eines Rückschlagventils - zur Verfügung zu stellen. Der Deckel kann insbesondere eine elektrische Schnittstelle - wie eine Steuer-Schnittstelle - zur Verfügung zu stellen.

Besonders vorteilhaft ist vorgesehen, dass ein sogenannter auch als Entlüftungsdom bezeichneter Entlüftungsbereich des Lufttrockners wenigstens teilweise im Bereich der Gehäuseanordnung angeordnet ist. Insbesondere ist ein Entlüftungsbereich des Lufttrockners wenigstens teilweise im Deckel angeordnet. Der Entlüftungsbereich ist wenigstens teilweise in pneumatische Leitungen unterteilt, vorzugsweise durch eine Formdichtung. Eine Dichtung im Deckel lässt sich so vorteilhaft zu Dichtungszwecken und zur Strukturierung des Entlüftungsbereichs nutzen. Die Gehäuseanordnung und/oder Deckel lassen sich dadurch konstruktiv vereinfachen.

Ein Deckel ist insbesondere modular ausgebildet. Vorzugsweise ist der Deckel aus einer Anzahl von Deckelplatten aufgebaut. Eine erste Deckelplatte weist vorzugsweise pneumatische Funktionsmittel, insbesondere wenigstens eine pneumatische Leitung, wenigstens eine Dichtung und/oder eine pneumatische Schnittstelle auf. Eine zweite Deckelplatte weist steuerelektrische und/oder elektrische Funktionsmittel, vorzugsweise wenigstens eine elektrische Steuerleitung und/oder wenigstens eine elektrische und/oder steuerelektrische Schnittstelle vor.

Insgesamt lässt sich durch einen mit oben genannten Funktionsmitteln versehener Deckel die Anbindung einer Druckluftversorgungsanlage in spezifischer Form realisieren und variieren, ohne dass der Lufttrockner oder die Gehäuseanordnung in den Gehäuseteilen maßgeblich geändert werden müsste. Dies ermöglicht eine vereinheitlichte Produktion der Druckluftversorgungsanlage und kundenspezifische Anpassungen lassen sich mittels dem Deckel einfacher, flexibler und kostengünstiger realisieren.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der beanspruchten Erfindung abzuweichen. Der Einfachheit halber sind dort wo sinnvoll, nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 ein Schaltungsdiagramm eines pneumatischen Systems mit einer Luftfederanlage und einer Druckluftversorgungsanlage gemäß einer ersten bevorzugten Ausführungsform, hier mit einem stromlos geschlossenen steuerbaren Magnetventil mit einem Einzelanker;
Fig. 2 ein verallgemeinertes Schaltungsdiagramm der Druckluftversorgungsanlage gemäß einer u. a. gegenüber Fig. 1 und Fig. 4 verallgemeinerten Ausführungsform;
Fig. 3 eine konstruktive Realisierung einer Druckluftversorgungsanlage gemäß einer verallgemeinerten Ausführungsform der Fig. 2;
Fig. 4 ein Schaltungsdiagramm eines pneumatischen Systems mit einer Luftfederanlage und einer Druckversorgungsanlage gemäß einer zweiten bevorzugten Ausführungsform, hier mit einem stromlos offenen steuerbaren Magnetventil mit einem Einzelanker;
Fig. 5 eine bevorzugte konstruktive Realisierung der Druckluftversorgungsanlage, ausgehend von Fig. 3, mit einer bevorzugten Magnetventilanordnung als Einzelanker-Magnetventil, hier zur Verwendung in einem pneumatischen System gemäß Fig. 1;
Fig. 6 einen bevorzugten Trockenbehälter mit modularem Aufbau eines Deckels in einer Explosionsdarstellung, für eine ausgehend von Fig. 2 weitergebildete Druckluftversorgungsanlage gemäß einer dritten bevorzugten Ausführungsform mit einem sogenannten Doppelanker-Magnetventil;
Fig. 7 eine bevorzugte konstruktive Realisierung der Druckluftversorgungsanlage gemäß einer dritten bevorzugten Ausführungsform mit einem sogenannten Doppelanker-Magnetventil und mit einem Trockenbehälter der Fig. 6 wobei das Doppelanker-Magnetventil ein Primärventil und ein Sekundärventil hat;
Fig. 7A, 7B, 7C drei abgewandelte Doppelanker-Magnetventile im Detail für die Druckluftversorgungsanlage der Fig. 7, nämlich in (A) mit einer Reihenschaltung von Primärventil und Sekundärventil, wobei eine Drossel am Ventilsitz gebildet ist, in (B) mit einer Reihenschaltung von Primärventil und Sekundärventil, wobei eine Drossel an einem Hochdruckentlüftungskanal gebildet ist, in (C) mit einer Parallelschaltung von Primärventil und Sekundärventil.

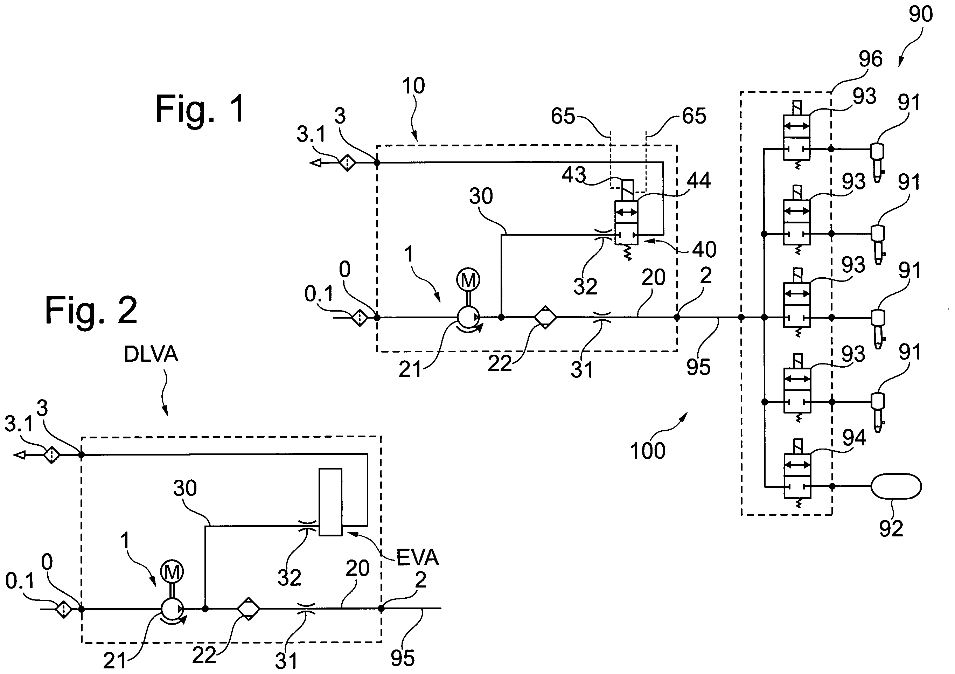

Fig. 1 zeigt ein pneumatisches System 100 mit einer Druckluftversorgungsanlage 10 und einer Pneumatikanlage 90, vorliegend in Form einer Luftfederanlage. Für identische oder ähnliche Teile oder Teile identischer oder ähnlicher Funktion sind, wo zweckmäßig, gleiche Bezugszeichen verwendet. Die Luftfederanlage weist eine Anzahl von vier sogenannten Bälgen 91 auf, die jeweils einem Rad eines nicht näher dargestellten Fahrzeugs zugeordnet sind sowie einen Speicher 92 zur Speicherung schnell verfügbarer Druckluft für die Bälge 91. Die Bälge 91 und der Speicher 92 sind an eine gemeinsame, eine Galerie 95 bildende Pneumatikleitung angeschlossen, welche auch die pneumatische Verbindung zwischen der Druckluftversorgungsanlage 10 und der Pneumatikanlage 90 bildet. Den Bälgen 91 ist jeweils ein stromlos geschlossenes Magnetventil 93 als ein Niveauregelventil vorgeschaltet und dem Speicher 92 ist ein stromlos geschlossenes Magnetventil 94 als ein Speicherregelventil vorgeschaltet. Die Magnetventile 93, 94 sind vorliegend in einem Ventilblock 96 von fünf Magnetventilen angeordnet. Der Ventilblock 96 kann in einer abgewandelten Ausführungsform andere oder weniger Magnetventile und/oder in einem 2-fach Ventilblock angeordnete Magnetventile aufweisen. Unter einer Galerie ist ganz allgemein jede Art einer Sammelleitung zu verstehen, von welcher Zweigleitungen zu Bälgen 91, einem Speicher 92 und/oder eine Leitung zur Druckluftversorgungsanlage 10 abgehen.

Die Druckluftversorgungsanlage 10 dient zum Betreiben der Pneumatikanlage 90 in Form der Luftfederanlage und versorgt die Galerie 95 derselben über einen Druckluftanschluss 2. Die Druckluftversorgungsanlage 10 weist außerdem eine Luftzuführung 0 zum Ansaugen von Luft über einen Filter 0.1 und einen Entlüftungsanschluss 3 zum Abgeben von Luft über einen Filter 3.1 in die Umgebung auf. Dem Entlüftungsanschluss 3 in Entlüftungsrichtung stromabwärts nachgeschaltet bzw. der Luftzuführung 0 entgegen der Befüllrichtung stromaufwärts vorgeschaltet ist jeweils ein Filter 3.1 bzw. 0.1. In Befüllrichtung stromabwärts des Druckluftanschlusses 2 ist die Pneumatikanlage 90 in Form der Luftfederanlage angeordnet. In einer pneumatischen Verbindung zwischen Luftzuführung 0 und Druckluftzuführung 1 weist die Druckluftversorgungsanlage 10 darüber hinaus einen Luftverdichter 21 in Form eines Kompressors auf, der - über einen Motor M angetrieben- zur Versorgung der Druckluftzuführung 1 mit Druckluft vorgesehen ist. In einer pneumatischen Verbindung zwischen Druckluftzuführung 1 und Druckluftanschluss 2 ist weiter ein Lufttrockner 22 und eine erste Drossel 31, hier als Regenerationsdrossel, angeordnet. Der Filter 0.1, die Luftzuführung 0, der Luftverdichter 21, die Druckluftzuführung 1, der Lufttrockner 22 und eine erste Drossel 31 sind zusammen mit dem Druckluftanschluss 2 in einer die pneumatische Verbindung zur Galerie 95 bildenden Druckluftversorgungsleitung 20 in dieser Reihenfolge angeordnet.

In einer pneumatischen Verbindung zwischen Druckluftzuführung 1 und Entlüftungsanschluss 3 in der Druckluftversorgungsanlage 10 ist eine Entlüftungsventilanordnung in Form einer steuerbaren Magnetventilanordnung 40 mit einem Magnetteil 43 und einem Pneumatikteil 44 zum Ablassen von Luft zu einem Entlüftungsanschluss 3 vorgesehen. Die Magnetventilanordnung 40 ist in einer die pneumatische Verbindung bildenden Entlüftungsleitung 30 angeordnet, welche zwischen Druckluftzuführung 1 und der Magnetventilanordnung 40 eine zweite Drossel 32 als Entlüftungsdrossel aufweist. Vorliegend ist die Magnetventilanordnung 40 mit einem stromlos geschlossenen einzigen Magnetventil gebildet, das über die Steuerleitung 65 angesteuert wird.

Mit Vorteil versehen ist ein eine druckquellenseitige pneumatische Kammer bildender Leitungsabschnitt der Entlüftungsleitung 30 zur pneumatischen Anbindung der Magnetventilanordnung 40 und der zweiten Drossel 32 an der Druckluftversorgungsleitung 20 -hier an der Druckluftzuführung 1- angeschlossen. Der Anschluss an der Druckluftzuführung 1 zwischen Luftverdichter 21 und Trockner 22 hat zur Folge, dass im Falle einer Entlüftung der Druckluftversorgungsanlage 10 über die Entlüftungsleitung 30 Druckluft entlüftet wird, welche stromaufwärtig vor dem Lufttrockner 22 entnommen wird, also vereinfacht gesagt ungetrocknete Luft.

Aus der Darstellung der Ausführung in Fig. 1 ist erkennbar, dass die Druckluftversorgungsanlage 10 mit einer Magnetventilanordnung 40 als direkt gesteuerte Entlüftungs-Magnetventilanordnung ausgeführt ist, mit der durch Ansteuerung über eine Steuerleitung 65 eine direkte Schaltung des gesamten Druckluftvolumens möglich ist. Das symbolisch dargestellte Magnetventil der Magnetventilanordnung 40 ist das einzige Ventil der Magnetventilanordnung 40. Diese Maßnahme erlaubt eine schnelle und flexible Entlüftung der Pneumatikanlage 90 bzw. der Druckluftversorgungsanlage 10, ohne dass ein zusätzliches Steuerventil nötig wäre. Es lassen sich Bauteile und Bauraum einsparen. Insbesondere sind kaum Anforderungen an einen Mindestvorsteuerdruck zum Betrieb der Druckluftversorgungsanlage 10 erforderlich. Dadurch lässt sich prinzipiell eine schnelle und flexible Funktionsweise auch im Hinblick auf den Lufttrockner 22 mit dem vorliegend beschriebenen Konzept einer Druckluftversorgungsanlage 10 erreichen.

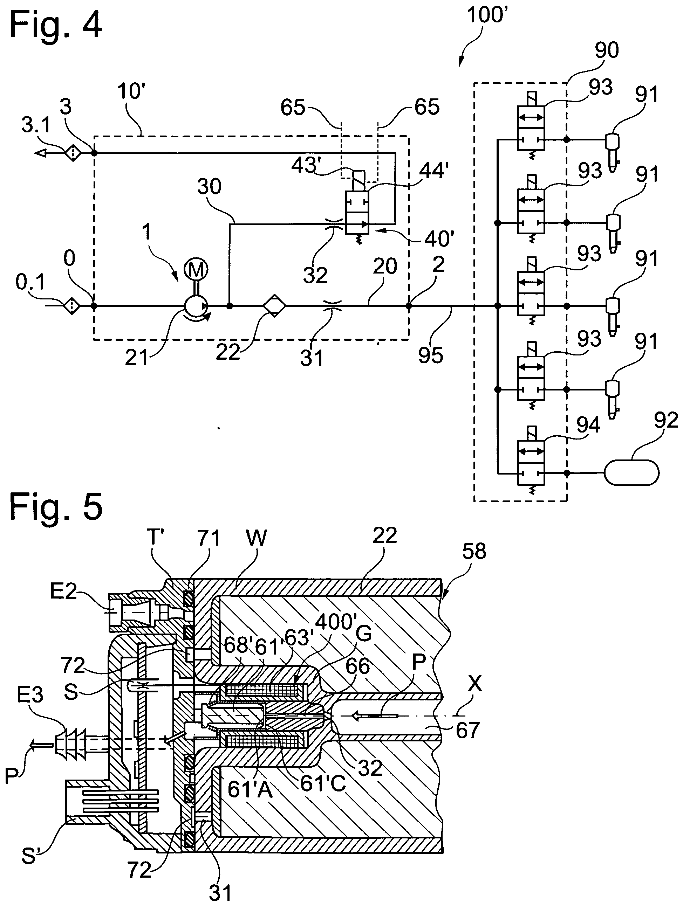

Fig. 2 zeigt eine gegenüber der Druckluftversorgungsanlage 10 der Fig.1 und ebenso gegenüber der Druckluftversorgungsanlage 10' der Fig.4 verallgemeinerte Form einer Druckluftversorgungsanlage DLVA. Die Entlüftungsventilanordnung EVA ist lediglich symbolisch (als Rechteck) dargestellt und kann mit einer Magnetventilanordnung 40 der Fig. 1 oder mit einer Magnetventilanordnung 40' der Fig. 4 ausgeführt werden. Grundsätzlich ist die Entlüftungsventilanordnung EVA jedoch nicht darauf beschränkt, sondern kann auch durch eine zweckmäßige andere Magnetventilanordnung oder sonstige Ventilanordnung ausgeführt werden.

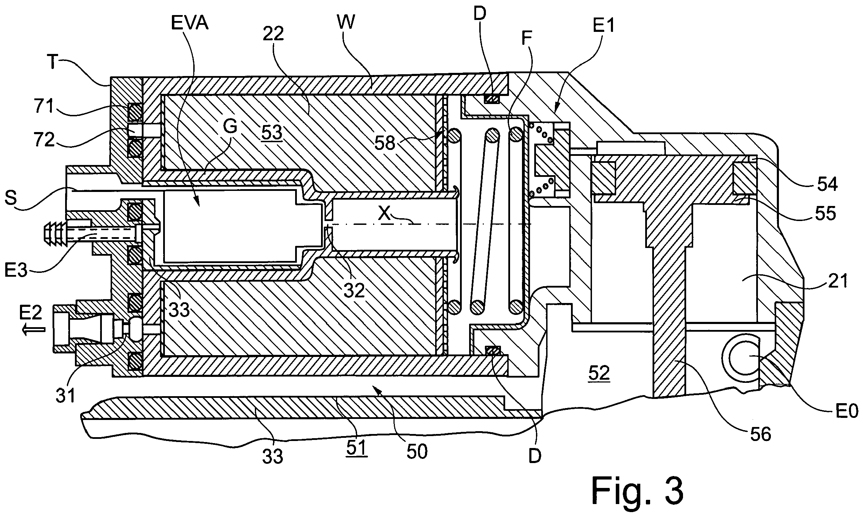

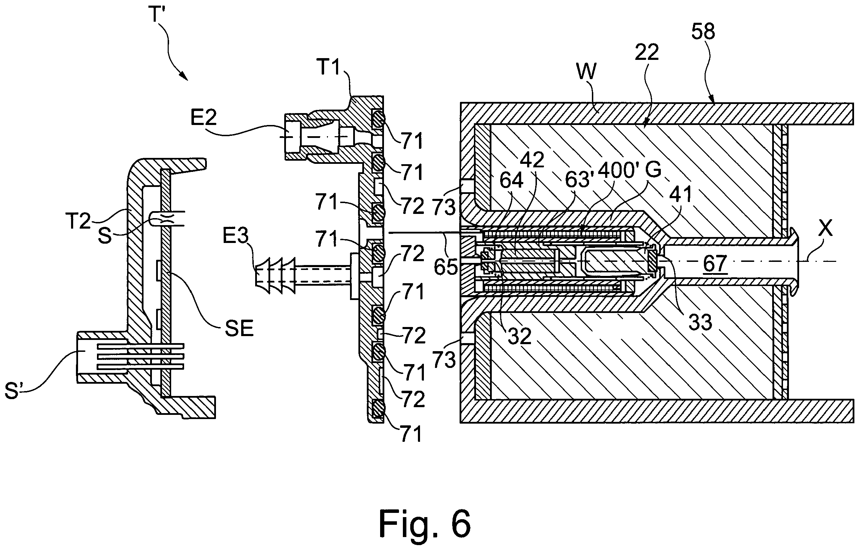

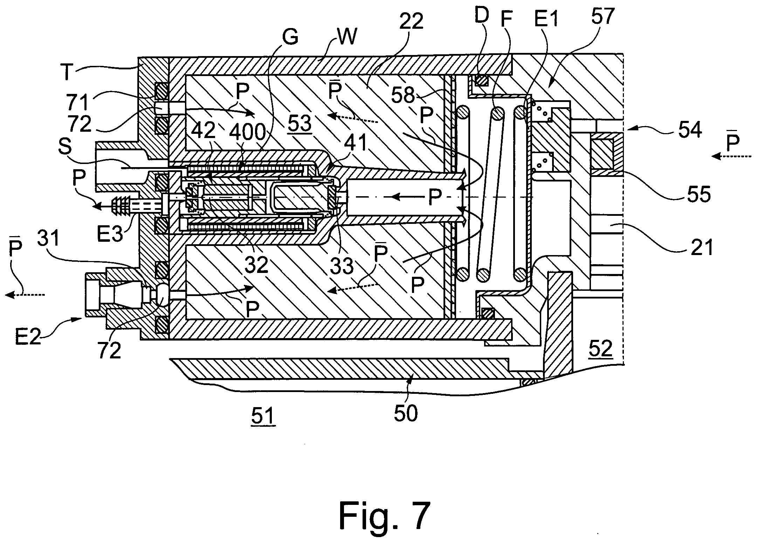

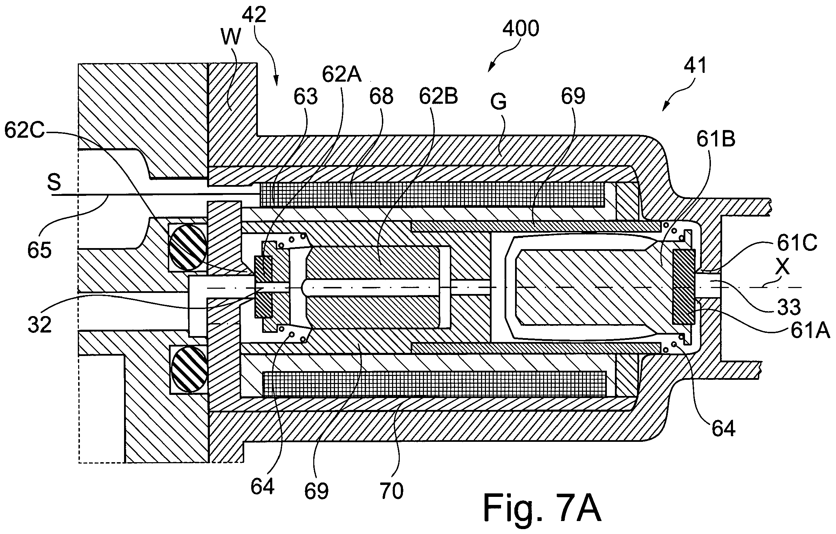

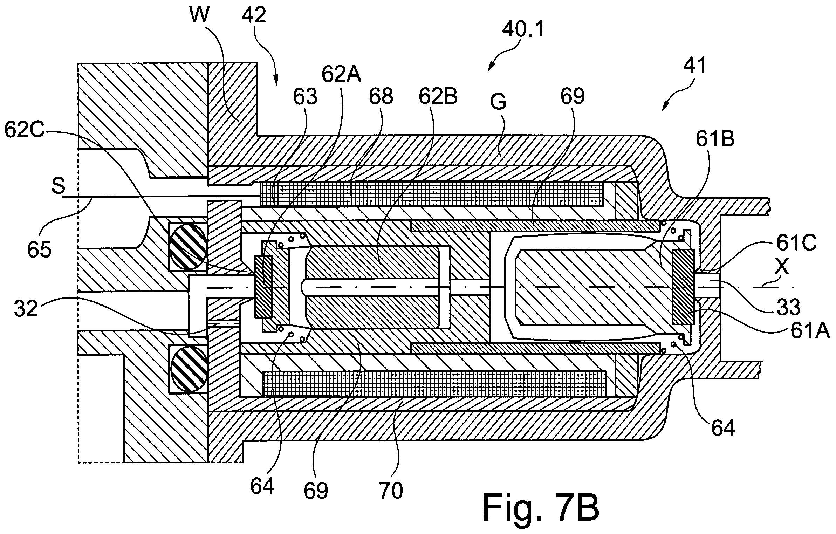

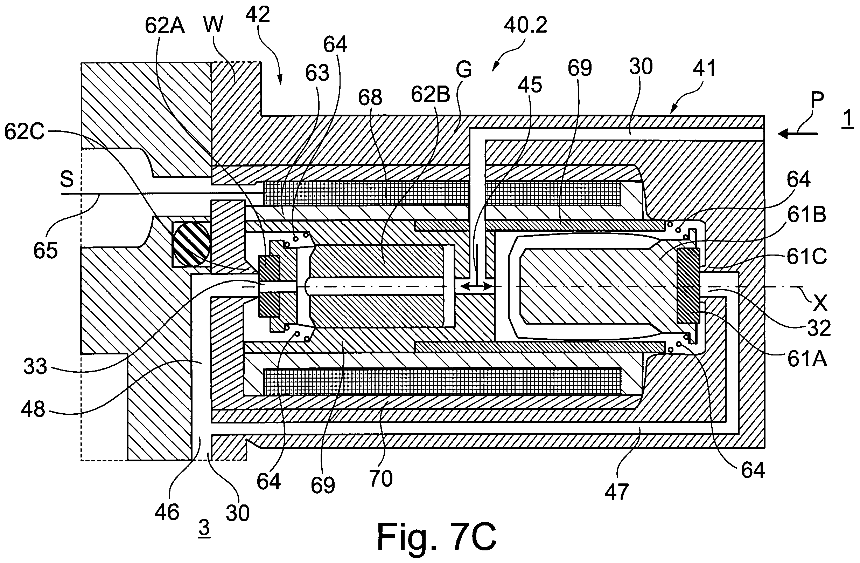

Fig. 3 zeigt entsprechend Fig.2 eine verallgemeinerte konstruktiv realisierte Ausführungsform einer Druckluftversorgungsanlage DLVA mit einer lediglich symbolisch (als Rechteck) dargestellten Entlüftungsventilanordnung EVA. Diese lediglich symbolisch (als Rechteck) dargestellte Entlüftungsventilanordnung EVA der Fig. 3 kann beispielsweise mit einer konstruktiv realisierten Magnetventilanordnung 400' der Fig. 5 (d.h. mit einem stromlos offenen steuerbaren Magnetventil mit einem Einzelanker) ausgeführt werden. Die Entlüftungsventilanordnung EVA kann auch mit einer konstruktiv realisierten Magnetventilanordnung 400 der Fig. 6, Fig. 7 , Fig.7A bzw. einer konstruktiv abgewandelten Magnetventilanordnungen 40.1 oder 40.2 der Fig. 7B oder Fig.7C (d. h. mit einem stromlos geschlossenen oder offenen steuerbaren sogenannten Doppelanker-Magnetventil) ausgeführt werden. Mit anderen Worten lässt sich das Konzept der Erfindung - wie es anhand von Fig. 3 ff. konstruktiv beispielhaft beschrieben ist - mit im Prinzip verschiedensten Magnetventilanordnungen in unterschiedlicher pneumatischer Verschaltung und/oder konstruktiver Realisierung im Rahmen der Ansprüche verwirklichen.

Im Einzelnen ergibt sich die Funktionsweise der Druckluftversorgungsanlage 10 anhand von Fig. 1 verdeutlicht, wie folgt. Die Druckluftzuführung 1 wird durch Ansaugen von Luft über den Filter 0.1 und die Luftzuführung 0 mit Druckluft versorgt, indem der über den Motor M angetriebene Luftverdichter 21 angesaugte Luft komprimiert. Die Pneumatikanlage 90 in Form der Luftfederanlage wird über den Druckluftanschluss 2 mit Druckluft aus der Druckluftzuführung 1 versorgt, die über den Lufttrockner 22 und die erste Drossel 31 dem Druckluftanschluss 1 zugeführt wird. Dazu ist die Druckluftversorgungsleitung 20 der Druckluftversorgungsanlage 10 über den Druckluftanschluss 2 mit der Galerie 95 der Pneumatikanlage 90 verbunden.

Beim Erreichen des Speicherenddrucks in der Pneumatikanlage 90 -vorliegend in einem Druckbereich von etwa 15 bis 20 bar im Speicher und 5 bis 10 bar in den Bälgen -wird die Druckluftversorgungsanlage 10 entlüftet. Für die zweite Drossel 32 zwischen Druckluftzuführung 1 und Magnetventilanordnung 40 ist ein größeres Nennweitenmaß vorgesehen als für die erste Drossel 31 zwischen Lufttrockner 22 und Druckluftanschluss 2. Dadurch entsteht ein für die Regeneration des Lufttrockners möglichst großes Druckgefälle. Dies erlaubt eine vorteilhafte Entlüftung der Druckluftversorgungsanlage 10 und/oder Regeneration des Lufttrockners 22 bei einem vorteilhaft ausgelegten Druckniveau. Je größer ein Nennweitenabstand ist, desto besser kann eine Regeneration des Lufttrockners 22 erfolgen, da dadurch ein vergleichsweise vergrößerter Druckabfall und damit eine ausreichend hohe Druckwechselamplitude realisierbar ist.

Vorliegend kann eine Entlüftung der Druckluftversorgungsanlage 10 nach Erreichen des Speicherenddrucks, d.h. beim Erreichen des sogenannten Speicherfüllen-Endes, ebenso wie im Falle einer Fahrzeugabsenkung im Regelbetrieb durch Öffnen der Magnetventilanordnung 40 erfolgen. Eine Regeneration des Lufttrockners 22 als auch eine flexible und schnelle Entlüftung durch Auslegung der Nennweiten der Drosseln 31, 32 ist zweckmäßig gewährleistet.

Fig. 4 zeigt eine zur ersten Ausführungsform der Fig. 1 alternative und unter die allgemeine symbolische Darstellung der Druckluftversorgungsanlage DLVA der Fig. 2 fallende Ausführungsform einer Druckluftversorgungsanlage 10' in einem pneumatischen System 100' mit einer Pneumatikanlage 90. Wiederum sind der Einfachheit halber für identische oder ähnliche Teile oder Teile identischer oder ähnlicher Funktion gleiche Bezugszeichen verwendet sind, sodass zur Beschreibung im wesentlichen auf die Fig. 1 verwiesen werden kann. Ein wesentlicher Unterschied der Druckluftversorgungsanlage 10' der Fig. 4 im Vergleich zu der Druckluftversorgungsanlage 10 der Fig. 1 besteht in der Ausgestaltung der Magnetventilanordnung 40'. Diese ist als eine direkt gesteuerte Magnetventilanordnung 40' realisiert-jedoch diesmal mit einem stromlos offenen Magnetventil, das dementsprechend bei stromlosem Magnetteil 43' mit offenem Pneumatikteil 44' ausgestaltet ist.

Die Druckluftversorgungsanlage 10 der Fig. 1 oder die Druckluftversorgungsanlage 10' der Fig. 4 kann als eine in Fig. 3 dargestellte Einrichtung einer verallgemeinerten Druckluftversorgungsanlage DLVA mit einer Gehäuseanordnung 50 realisiert werden, die eine Anzahl von Gehäusebereichen aufweist. In einem ersten symbolisch dargestellten Bereich 51 ist ein Antrieb -vorliegend in Form eines nicht näher dargestellten Motors M- und in einem zweiten Bereich 52 ist der vom Motor M antreibbare Luftverdichter 21 angeordnet. Der Luftverdichter 21 weist einen im Verdichtungsraum 54 hin und her bewegbaren Kolben 55 auf, der im Betriebsfall über eine Welle und ein Pleuel 56 vom Motor M angetrieben wird. Dem Verdichtungsraum 54 wird Luft über eine Luftzuführungs-Schnittstelle E0 der oben genannten Luftzuführung 0 zugeführt. Am Ausgang des Verdichtungsraums 54 befindliche Druckluft wird über ein Auslassventil 57 oder dergleichen einer Druckquellen-Schnitte E1 für die oben genannte Druckluftzuführung 1 übergeben. Die Druckluft wird in einen dritten Bereich 53 der Gehäuseanordnung 50 abgegeben. Der dritte Bereich 53 enthält den Lufttrockner 22 mit dem Trockenbehälter 58 und eine Entlüftungsventilanordnung EVA, beispielsweise eine Magnetventilanordnungen 40, 40' bzw. konstruktiv realisiert als eine Magnetventilanordnung 400, 400', 40.1, 40.2. Gehäuseteile der Bereiche 51, 52, 53 sind vorliegend über eine oder mehrere Dichtungen D gegeneinander abgedichtet. Einem mit der Wandung W gebildeten Gehäuseteil des dritten Bereichs 53 ist ein das Gehäuseteil bodenseitig abschließender Deckel T zugeordnet.

Der Deckel T weist eine Druckluftversorgungs-Schnittstelle E2 für die oben genannte Druckluftzuführung 2 auf. Die erste Drossel 31 ist vorliegend mit definierter Nennweite als Öffnung im Trockenbehälter 58 gebildet. Der Deckel T bildet auch eine Entlüftungs-Schnittstelle E3 für den oben genannten Entlüftungsanschluss 3 aus. Der Deckel T bildet auch eine elektrische Steuer-Schnittstelle S zur Anbindung der oben genannten Steuerleitung 65 an die Entlüftungsventilanordnung EVA aus. Der Deckel T ist in seinen Maßen weitgehend kongruent mit einer Bodenkontur des Trockenbehälters 58 und kann praktisch passgenau auf den Trockenbehälter 58 aufgesetzt werden.

Ein Gehäuseteil des dritten Bereichs 53 ist vorliegend mittels einer Wandung W des mit Trockengranulat gefüllten Trockenbehälters 58 und mittels dem Deckel T gebildet. Das Trockengranulat wird durch eine Feder F im Trockenbehälter 58 unter Druck gehalten. Die Wandung W wiederum bildet bodenseitig des Trockenbehälters 58 eine symmetrisch zu einer weitgehend mittigen Achse X des Trockenbehälters 58 angeordnete Einbuchtung G, die frei von Trockenmittel ist. Dem Konzept der Erfindung folgend ist in der Einbuchtung G eine Entlüftungsventilanordnung EVA weitgehend symmetrisch, d.h. vorliegend parallel und mittig zur Achse des Trockenbehälters 58 untergebracht. Bodenseitig schließt der Deckel T die Einbuchtung G zusammen mit der darin befindlichen Entlüftungsventilanordnung EVA dicht ab. Durch die U-förmige Anordnung des ersten, zweiten und dritten Bereichs 51, 52, 53 wird eine bauraumsparende Gehäuseanordnung 50 zur Verfügung gestellt, welche zudem horizontale Schnittstellen - nämlich als S, E0, E2, E3 - ermöglicht. Außerdem wird eine Gewichtseinsparung dadurch erreicht, dass die Außenkontur des Trockenbehälters 58 des Lufttrockners 22 und der Deckel T als Teil der Gehäuseanordnung 50 genutzt wird.

Der Deckel T nimmt als Teil der Gehäuseanordnung 50 der Druckluftversorgungsanlage DLVA nicht nur Dichtungen zum druckluftdichten Abschließen des dritten Bereichs 53 auf. Darüber hinaus ragen in den Deckel T Leitungen 72, welche an entsprechende Durchführungen im Trockenbehälter 58 anschließen und im Deckel T wenigstens teilweise geführt sind. Zur Bildung der Leitungen 72 sind die Dichtungen im Deckel T als eine Formdichtung 71 ausgeführt. Diese unterteilt einen auch als Entlüftungsdom bezeichneten Entlüftungsbereich wenigstens teilweise in die Leitungen 72. Außerdem wird der Deckel T durch Schnittstellen durchbrochen. Dabei wird eine Druckluftversorgungs-Schnittstelle E2 für den Druckluftanschluss 2 und eine Entlüftungs-Schnittstelle E3 für den Entlüftungsanschluss 3 der Druckluftversorgungsanlage DLVA gebildet.

Die Steuer-Schnittstelle S dient zur Anbindung an die oben genannte Steuerleitung 65 der Entlüftungsventilanordnung EVA.

Vorliegend umfasst die verallgemeinerte symbolische Darstellung der Entlüftungsventilanordnung EVA insbesondere eine Magnetventilanordnung 40, 40', bei der sowohl die Anordnung des Pneumatikteils 44 bzw., 44' als auch des Magnetteils 43 bzw. 43'in einem gemeinsamen Ventilgehäuse und in der durch die Wandung W gebildeten Einbuchtung G vorgesehen ist. Unter Weiterbildung des Konzepts der Erfindung lässt sich mit dieser Ausführungsform eine besonders kompakte Anordnung z.B. der Magnetventilanordnung 40, 40' in der durch die Wandung W des Trockenbehälters 58 gebildeten Einbuchtung G erreichen.

Insbesondere ist -wie anhand der Fig.5 ff im Detail gezeigt- ein Ventilsitz, ein Ventilkörper und die Ventildichtung des Pneumatikteils in der Einbuchtung G angeordnet. Dadurch lässt sich eine Wärmeproduktion des Pneumatikteils der Magnetventilanordnung 40, 40'an das Trockenmittel im Trockenbehälter 58 abgeben. Insbesondere kann eine Wärmeproduktion einer Spule an das Trockenmittel abgegeben werden, sodass eine Trocknereffizienz erhöht ist.

Fig. 5 zeigt -ausgehend von Fig. 3- eine konkrete konstruktive Realisierung einer Magnetventilanordnung 400' mit einem einzigen Anker 61'. Die Magnetventilanordnung 400' ist gemäß Vorgabe der Fig. 4 in einem stromlos offenen Zustand gezeigt. Als solches kann die Magnetventilanordnung 400' anstelle der verallgemeinert dargestellten Entlüftungsventilanordnung EVA der Fig. 3 in die Einbuchtung G des dargestellten Trockenbehälters 58 eingesetzt werden. Die Magnetventilanordnung 400' ist in einer durch die Wandung W gebildeten Einbuchtung G des Trockenbehälters 58 vollständig angeordnet. Die Einbuchtung G schließt an einen der Magnetventilanordnung 400' auf der Achse X des Trockenbehälters 58 vorgeordneten Freiraum 67 an. Die Magnetventilanordnung 400' bildet so in der Einbuchtung G des Trockenbehälters 58 einen luftdurchströmbaren Kanal 66 durch den Trockenbehälter 58 aus.

Die Pfeile in Fig. 5 zeigen eine Entlüftungsströmung P bei einem stromlos offenen Zustand der Magnetventilanordnung 400'gemäß Vorgabe der Fig. 4. Der in Fig. 4 gezeigte Magnetteil 43' wird vorliegend durch einen Spulenkörper 63' und einen einzigen Anker 61' gebildet, welcher durch den Spulenkörper 63' bei Bestromung aktivierbar ist. Erkennbar ist der Anker 61' bei stromlosem Spulenkörper 63' derart durch eine Feder 68' - vorliegend als Druckfeder - festgelegt, dass ein auf dem Anker 61 angebrachtes Dichtelement 61'A von einem dem Dichtelement 61'A zugeordneten Ventilsitz 61'C abgehoben ist. Die Druckluft kann in der Entlüftungsströmung P durch einen die Drossel 32 ausbildenden Kanal 66 und am Anker 61' vorbei entweichen. Die Druckluft der Entlüftungsströmung P entweicht weiter durch die im Deckel T' geführten Kanäle 72 zur Entlüftungs-Schnittstelle E3 des Entlüftungsanschlusses 3. Der Deckel T' ist im Vergleich zu dem in Fig. 3 dargestellten Deckel T modifiziert.

Fig. 6 zeigt zur ergänzenden Erläuterung den in Fig. 5 dargestellten Deckel T' in einer Explosionsdarstellung. Der Deckel T' ist in seinen äußeren Berandungen weitgehend kongruent mit einem Querschnitt des Trockenbehälters 58 ausgebildet. Der Deckel T' nimmt als Teil der Gehäuseanordnung 50 eine Formdichtung 71 auf, welche einen Entlüftungsbereich im Deckel T' in Leitungen 72 unterteilt, die an entsprechende Durchführungen 73 im Trockenbehälter 58 anschließen. Der Deckel T' ist wiederum von Schnittstellen durchsetzt, nämlich von einer Druckluftversorgungs-Schnittstelle E2, einer Entlüftungs-Schnittstelle E3 und einer Steuer-Schnittstelle S. Pneumatische Funktionsmittel des Deckels T' einerseits - ausgebildet durch Formdichtung 71, Leitungen 72 und Schnittstellen E2, E3 - sind auf einer ersten Deckelplatte T1 gebildet. Elektrische bzw. steuerelektrische Funktionsmittel des Deckels T' andererseits - gebildet durch die Steuer-Schnittstelle S mit einer dazugehörigen Steuerelektronik SE auf einer Platine - ist auf einer zweiten Deckelplatte T2 gebildet. Die erste Deckelplatte T1 nimmt die pneumatischen Funktionsmittel auf. Die zweite Deckelplatte T2 nimmt eine Steuer-Schnittstelle S und eine die Steuerelektronik SE tragende Platine oder einen sonstigen Träger auf. Die zweite Deckelplatte T2 ist in Form einer Deckhaube ausgebildet und hat Durchführungen für jedenfalls die Entlüftungs-Schnittstelle E3. Die Druckluftversorgungs-Schnittstelle E2 ist an der zweiten Deckelplatte T2 vorbeigeführt. Der durch die zwei Deckelplatten T1, T2 modular zusammengesetzte Deckel T' nimmt also unterschiedliche, d.h. pneumatische bzw. elektrische/steuerelektrische Funktionsmittel in unterschiedlichen Deckelplatten T1, T2 auf. Die gezeigte modulare Ausführung des Deckels T' hat sich als besonders vorteilhaft erwiesen, da dieser kundenspezifisch mit Schnittstellen -nämlich E2, E3, S- ausgeführt werden kann, die bei Bedarf angepasst werden können. Dagegen kann die weitere Gehäuseanordnung 50 mit einer Druckluftversorgungsanlage DLVA unverändert und einheitlich jedoch durch den Deckel T' anpassbar- zur Verfügung gestellt werden. Diese kann mit angepasstem Deckel T' oder eines seiner Deckelplatten T1, T2 an eine Peripherie angeschlossen werden.

Die Steuerschnittstelle S umfasst insbesondere einen Kontakt zur Steuerelektronik SE, welcher mit einer Steuerleitung 65 zur Magnetventilanordnung 400' - vorliegend zum Spulenkörper 63' - kontaktierbar ist. Insofern wird die Steuerschnittstelle S durch die erst Deckelplatte T1, vorzugsweise an einer nicht mit Druck beaufschlagten Stelle, hindurch geführt. Über die so kontaktierte Steuerelektronik SE kann ein Steuersignal der Steuerleitung 65 an einen Steueranschluss S' der zweiten Deckelplatte T2 weitergegeben werden. Die Steuerschnittstelle S und der Steueranschluss S' sind über die Steuerelektronik verbunden, welche bevorzugt auch mit weiteren hier nicht gezeigten Steuerleitungen kontaktiert ist und dadurch geeignete Steuersignale der Magnetventilanordnung 400' sowie auch der weiteren Druckluftversorgungsanlage 10, 10' gebündelt und zentral verarbeitet, dem Steueranschluss S' zur Verfügung stellt. Dies kann zum Beispiel Steuersignale und auch Sensorsignale sowie auch Datensignale umfassen. Beispielhaft seien Wegsensorsignale, Höhenstandsignale oder Datensignale für Fahrzeugdaten oder Systemanforderungen genannt. Auch können bei der Steuerelektronik SE Sensorsignale von Druck- und Temperatursensoren gebündelt werden.

Vorteilhaft kann die die Steuerelektronik SE tragende Platine auch eine Sensorik direkt tragen, so z. B. einen Drucksensor und/oder Temperatursensor. Die Steuerelektronik SE kann geeignete Bauteile zur Verarbeitung der Sensorsignale dieser Sensorik aufweisen, sodass entsprechende Sensorsignale über den Steueranschluss S' direkt von der Platine der Steuerelektronik SE abgegriffen werden können.

Im Prinzip kann so mit der Steuerelektronik SE ein Steuergerät auf der zweiten Deckelplatte T2 realisiert sein, das mit einer Sensorik auf der zweiten Deckelplatte T2 zusammenarbeitet sowie auch der Mechanik bzw. Pneumatik auf der ersten Deckelplatte T1 und der Druckluftversorgungsanlage 10, 10'. Auf diese Weise lässt sich mittels des Deckels T' ein komplettes mechatronisches System unter Anbindung der Druckluftversorgungsanlage 10,10' bilden.

Fig. 7 zeigt in vergrößerter Darstellung eine weitere konkrete konstruktive Realisierung der anhand von Fig. 3 verallgemeinert beschriebenen Druckluftversorgungsanlage DLVA, wobei sich die Darstellung zweckmäßiger Weise auf den Lufttrockner 22 beschränkt und für gleiche oder ähnliche Teile oder Teile gleicher oder ähnlicher Funktion gleiche Bezugszeichen verwendet sind. Aus Fig. 7 ist erkennbar, dass eine Magnetventilanordnung 400 hier in Form eines Doppelanker-Magnetventils gebildet ist. Als solches kann die Magnetventilanordnung 400 anstelle der verallgemeinerten Darstellung einer Entlüftungsventilanordnung EVA der Fig. 3 eingesetzt werden. Die Magnetventilanordnung 400 ist vorliegend dreiseitig von der Einbuchtung G im Trockenbehälter 58 umfasst. Eine durch Pfeile dargestellte Entlüftungsströmung P -z. B. aus einer in Fig.1 dargestellten Galerie 95 einer Pneumatikanlage 90- kann über die Druckluftversorgungs-Schnittstelle E2, den Trockenbehälter 58 des Lufttrockners 22 und die Entlüftungs-Schnittstelle E3 im Deckel T geführt werden. Der Trockenbehälter 58 des Lufttrockners 22 ist auch mit einer symbolisch dargestellten Versorgungsströmung *P̅* durchströmbar. Die mit gestrichelten Pfeilen dargestellte Versorgungsströmung *P̅* dient der Versorgung der Pneumatikanlage 90 über die Galerie 95 und erfolgt über die in Fig. 3 dargestellte Luftzuführungs-Schnittstelle E0, die Druckquellen-Schnittstelle E1 sowie die in Fig. 7 ersichtliche Druckluftversorgungs-Schnittstelle E2. Die Entlüftungsströmung P verläuft entgegengesetzt zu einer Versorgungsströmung *P̅* und dient auch zur Regeneration des im Trockenbehälter 58 befindlichen nicht näher bezeichneten Trockengranulats.

In Fig. 7 ist die Magnetventilanordnung 400 als Doppelanker-Magnetventil in einem durch ein Mantelrohr 70 gebildetes Gehäuse desselben erkennbar. Diese weist gemäß vergrößerter Detaildarstellung in Fig. 7A einen ein erstes Dichtelement tragenden Primäranker 61B und einen ein zweites Dichtelement tragenden Sekundäranker 62B auf, wobei diese als Kern einer Spule im Spulenkörper 63 derselben angeordnet sind und mit einer Ventilfeder 64 auf einem zugeordneten Ventilsitz gehalten sind. Insgesamt zeigt Fig. 7 eine beidseitig stromlos geschlossene Stellung des Doppelanker-Magnetventils, bei welchen beiden Ankern jeweils auf ihrem Ventilsitz sitzen. Im Detail der Fig. 7A ist die Magnetventilanordnung 400 als Doppelanker-Magnetventil mit Primärventil 41 und Sekundärventil 42 dargestellt. Das Doppelanker-Magnetventil hat einen ein erstes Dichtelement 61A des Primärventils 41 tragenden Primäranker 61B und einen ein zweites Dichtelement 62A des Sekundärventils 42 tragenden Sekundäranker 62B, die als Kern einer Spule, d.h. in einer im Spulenkörper 63 vergossenen Wicklung 68 der Spule, angeordnet sind. Der Primäranker 61B und Sekundäranker 62B sind auf einer Achse X des Doppelanker-Magnetventils in dem mit Druckluft durchströmbaren Ankerführungsrohr 69 angeordnet. Jedes der ersten bzw. zweiten Dichtelemente 61A, 62A ist jeweils einem ersten bzw. zweiten Ventilsitz 61C, 62C zugeordnet, wobei sich der erste Ventilsitz 61C und der zweite Ventilsitz 62C eingangs und ausgangs des in einem Eisenkreisjoch gefassten Spulenkörpers 63 gegenüberliegen. Grundsätzlich eignet sich zur Realisierung des ersten bzw. zweiten Ventilsitzes 61C, 62C ein Elastomersitz oder auch ein metallischer Anschlag je nach Bedarf und Leckageanforderung. Vorliegend ist für einen Elastomersitz auch das erste und/oder zweite Dichtelement 61A, 62A aus einem Elastomer gebildet.

In einer abgewandelten Magnetventilanordnung 40.1 ist in Fig. 7B im Unterschied zu Fig. 7A - in der Fig. 7B über ersichtlich unterhalb des zweiten Ventilsitzes 62C - ein, die Drossel 32 ausbildender Durchlass im Ventilboden erkennbar, welcher die Funktion einer Hochdruckentlüftung ausführen kann. Der Ventilboden ist Teil eines Mantelrohres 70 zur Ausbildung eines Gehäuses der Magnetventil

Das vorliegend beschriebene Doppelanker-Magnetventil der Fig. 7 , Fig.7A wird zur Bildung einer Reihenanordnung von Primärventil 41 und Sekundärventil 42 im Rahmen einer Magnetventilanordnung 400 bzw. der abgewandelten Magnetventilanordnung 40.1 in Fig. 7B genutzt. Mit anderen Worten wird zunächst das Primärventil 41 und anschließend auch das Sekundärventil 42 als Entlüftungsventil der Magnetventilanordnung 400 bzw. der abgewandelten Magnetventilanordnung 40.1 nutzbar.

Im Rahmen einer weiter abgewandelten Magnetventilanordnung 40.2 in Fig. 7C ist eine Parallelanordnung von Primärventil 41 und Sekundärventil 42 in einem Mantelrohr 70 realisiert. Dabei kann - je nach Bedarf einer Nennweite - nur das Primärventil 41 oder nur das Sekundärventil 42 oder sowohl das Primärventil 41 als auch das Sekundärventil 42 zur Entlüftung einer Druckluftströmung genutzt werden. Fig. 7C zeigt eine Magnetventilanordnung 40.2, bei welcher das Primärventil 41 und das Sekundärventil 42 in einer Parallelschaltung miteinander verbunden sind. Der Einfachheit halber sind dazu für identische oder ähnliche Teile oder Teile identischer oder ähnlicher Funktion gleiche Bezugszeichen, wie bereits bei Fig. 7 bis Fig. 7B benutzt worden, so dass hinsichtlich des grundsätzlichen Aufbaus und der verwendeten Teile für die ebenfalls als Doppelanker-Magnetventil realisierte Magnetventilanordnung 40.2 auf die Beschreibung der Fig. 7 bis Fig. 7B grundsätzlich verwiesen werden kann. Das Doppelanker-Magnetventil der Magnetventilanordnung 40.2 ist vorliegend in einem sowohl für das Primärventil 41 als auch das Sekundärventil 42 geltenden stromlos geschlossenen Zustand gezeigt. Mit anderen Worten befindet sich die in Fig. 7C gezeigte Magnetventilanordnung 40.2 in einem beidseitig stromlos geschlossenen Zustand. Dieser Zustand ist analog des beidseitig geschlossenen Zustands, wie er in Fig.7 bis Fig. 7B für die Magnetventilanordnung 400, 40.1 gezeigt ist.

Ein wesentlicher Unterschied zwischen den Magnetventilanordnungen 40.2 zu denen in Fig.7 bis Fig.7B ist die im Folgenden beschriebene Kanalführung für Druckluft in der Magnetventilanordnung 40.2. Im Einzelnen ist in Fig. 7C ein eingangsseitiger, d.h. druckluftanschlussseitiger, pneumatischer Anschluss 45 und ein ausgangsseitiger, d.h. entlüftungsseitiger, pneumatischer Anschluss 46 einer Entlüftungsleitung 30 erkennbar. Zwischen den Anschlüssen 45, 46 ist das Primärventil 41 in einer ersten Zweigleitung 47 und das Sekundärventil 42 in einer zweiten Zweigleitung 48 pneumatisch angeschlossen. Des Weiteren ist in Fig. 7C die Nennweite einer zweiten Drossel 32 am Primärventil 41 als Öffnungsquerschnitt eines Einlasses zu einem bis Anschluss 45 reichenden Führungsraum für den Primäranker 61B erkennbar. Außerdem ist die Nennweite einer dritten Drossel 33 als Öffnungsweite des zweiten Ventilsitzes 62C des Sekundärventils 42 erkennbar. Eine Entlüftungsströmung P ist in Fig. 7B durch Pfeile in der Entlüftungsleitung 30 dargestellt. Wie bereits anhand von Fig. 1A erläutert, kann so die Entlüftungsströmung P wahlweise über das Primärventil 41 mit zugeordneter Nennweite der zweiten Drossel 32 und/oder über das Sekundärventil 42 mit zugeordneter Nennweite der dritten Drossel 33 von einer Druckluftzuführung 1 zu einem Entlüftungsanschluss 3 geführt werden.

Schaltströme zum sequentiellen oder gleichzeitigen Schalten des Primärventils 41 und des Sekundärventils 42 bei einer Magnetventilanordnung 40.1 oder 40.2 lassen sich entsprechend auslegen. Sowohl das Primärventil 41 als auch das Sekundärventil 42 sind durch Anordnung in einem gemeinsamen Spulenkörper 63 über den gleichen Steuerstrom schaltbar.

### BEZUGSZEICHENLISTE (Bestandteile der Beschreibung)

- 0: Luftzuführung
- 0.1: Filter
- 1: Druckluftzuführung
- 2: Druckluftanschluss
- 3: Entlüftungsanschluss
- 3.1: Filter
- 10: Druckluftversorgungsanlage
- 20: Druckluftversörgungsleitung
- 21: Luftverdichter
- 22: Lufttrockner
- 30: Entlüftungsleitung
- 31: erste Drossel
- 32: zweite Drossel
- 33: dritte Drossel
- 40, 40': Magnetventilanordnung
- 41: Primärventil
- 42: Sekundärventil
- 43, 43': Magnetteil
- 44, 44': Pneumatikteil
- 45,46: pneumatischer Anschluss
- 47, 48: Zweigleitung
- 50: Gehäuseanordnung
- 51: erster Bereich
- 52: zweiter Bereich
- 53: dritter Bereich
- 54: Verdichtungsraum
- 55: Kolben
- 56: Pleuel und Welle
- 57: Auslassventil
- 58: Trockenbehälter
- 61B: Primäranker
- 61': Anker
- 61A: erstes Dichtelement
- 62A: zweites Dichtelement
- 61'A: Dichtelement
- 61'C: Ventilsitz
- 61C: erster Ventilsitz
- 62C: zweiter Ventilsitz
- 62B: Sekundäranker
- 63, 63': Spulenkörper
- 64: Ventilfeder
- 65: Steuerleitung
- 66: Kanal
- 67: Freiraum
- 68: Wicklung
- 68': Feder
- 69: Ankerführungsrohr
- 70: Mantelrohr
- 71: Formdichtung
- 72: Leitung
- 73: Durchführungen
- 90: Pneumatikanlage
- 91: Balg
- 92: Speicher
- 93: Magnetventil
- 94: Magnetventil
- 95: Galerie
- 96: Ventilblock
- 100, 100': pneumatisches System
- 400, 400': Magnetventilanordnung
- D: Dichtung
- DLVA: Druckluftversorgungsanlage
- E0: Luftzuführungs-Schnittstelle, Schnittstelle
- E1: Druckquellen-Schnittstelle, Schnittstelle
- E2: Druckluftversorgungs-Schnittstelle, Schnittstelle
- E3: Entlüftungs-Schnittstelle, Schnittstelle
- EVA: Entlüftungsventilanordnung
- S: Steuer-Schnittstelle, Schnittstelle
- F: Feder
- G: Einbuchtung
- M: Motor
- P: Entlüftungsströmung
- *P̅*: Versorgungsströmung
- SE: Steuerelektronik
- T, T': Deckel
- T1: erste Deckelplatte
- T2: zweite Deckelplatte
- X: Achse des Trockenbehälters

## Patentansprüche

1. Druckluftversorgungsanlage (DLVA, 10, 10') zum Betreiben einer Pneumatikanlage (90), insbesondere einer Luftfederanlage eines Fahrzeugs, aufweisend:
- eine Luftzuführung (0) und einen Luftverdichter (21) zur Versorgung einer Druckluftzuführung (1) mit Druckluft,
- eine pneumatische Verbindung, insbesondere Entlüftungsleitung (30), mit einer Entlüftungsventilanordnung (EVA), insbesondere in Form einer steuerbaren Magnetventilanordnung (40, 40', 400, 400', 40.1, 40.2), und einen Entlüftungsanschluss (3) zum Ablassen von Luft, und
- eine pneumatische Verbindung, insbesondere Druckluftversorgungsleitung (20), mit einem Lufttrockner (22) und einem Druckluftanschluss (2) zur Versorgung der Pneumatikanlage (90) mit Druckluft, wobei der Lufttrockner (22) einen ein Trockenmittel enthaltenden von Druckluft durchströmbaren Trockenbehälter (58) aufweist,
**dadurch gekennzeichnet, dass**
der Trockenbehälter (58) eine eine trockenmittelfreie Einbuchtung (G) bildende Wandung (W) aufweist, und die Entlüftungsventilanordnung (EVA) wenigstens teilweise in der Einbuchtung (G) angeordnet ist.

2. Druckluftversorgungsanlage (DLVA, 10, 10') nach Anspruch 1,
**dadurch gekennzeichnet, dass** die Entlüftungsventilanordnung (EVA) ein wenigstens teilweise durch die Wandung (W) und/oder ein Mantelrohr (70) gebildetes Ventilgehäuse aufweist.

3. Druckluftversorgungsanlage (DLVA, 10, 10') nach Anspruch 1 oder 2,
**dadurch gekennzeichnet, dass** die Entlüftungsventilanordnung (EVA) in Form einer steuerbaren Magnetventilanordnung (40, 40', 400, 400', 40.1, 40.2) mit einem Magnetteil (43, 43') und einem Pneumatikteil (44, 44') gebildet ist, wobei der Pneumatikteil (44, 44') und/oder der Magnetteil (43, 43') wenigstens teilweise in der Einbuchtung (G) angeordnet ist.

4. Druckluftversorgungsanlage (DLVA, 10, 10') nach einem der Ansprüche 1 bis 3, **dadurch gekennzeichnet, dass** die Einbuchtung (G) symmetrisch, insbesondere parallel und/oder koaxial, zu einer Achse (X) des Trockenbehälters (58) angeordnet ist.

5. Druckluftversorgungsanlage (DLVA, 10, 10') nach einem der Ansprüche 1 bis 4, **dadurch gekennzeichnet, dass** die Einbuchtung (G) an einen der Entlüftungsventilanordnung (EVA) vorgeordneten, einbautenfreien Freiraum (67) anschließt, wobei der Freiraum (67) und die Entlüftungsventilanordnung (EVA) koaxial auf der Achse (X) des Trockenbehälters (58) angeordnet sind.

6. Druckluftversorgungsanlage (DLVA, 10, 10') nach einem der Ansprüche 1 bis 5, **dadurch gekennzeichnet, dass** die Entlüftungsventilanordnung (EVA) als eine steuerbare Magnetventilanordnung (40, 40', 400, 400', 40.1, 40.2) zur direkten Schaltung eines Druckluftvolumens, insbesondere aus einem einbautenfreien Freiraum (67) ausgelegt ist.

7. Druckluftversorgungsanlage (DLVA) nach einem der Ansprüche 1 bis 6, **dadurch gekennzeichnet, dass** die Entlüftungsventilanordnung (EVA) in Form einer steuerbaren Magnetventilanordnung (400, 40.1, 40.2) mit einem Primärventil (41) und einem Sekundärventil (42) gebildet ist, wobei das Primärventil (41) und das Sekundärventil (42) mit einem gemeinsamen auf beide wirkenden Steuermittel der Magnetventilanordnung (400, 40.1, 40.2) aktivierbar ist.

8. Druckluftversorgungsanlage (10, 10') nach einem der Ansprüche 1 bis 6, **dadurch gekennzeichnet, dass** die Entlüftungsventilanordnung (EVA) in Form einer steuerbaren Magnetventilanordnung (400') mit einem einzigen Anker (61') gebildet ist.

9. Druckluftversorgungsanlage (DLVA, 10, 10') nach einem der Ansprüche 1 bis 8, **dadurch gekennzeichnet, dass** die Magnetventilanordnung (40, 40', 400, 400', 40.1, 40.2) einen mit Elastomer gebildeten Ventilsitz (61C, 61'C, 62C) und/oder Anker (61B, 61', 62B) oder einen mit Metall gebildeten Ventilsitz (61C, 61'C, 62C) und/oder Anker (61B, 61', 62B) aufweist.

10. Druckluftversorgungsanlage (DLVA, 10, 10') nach einem der Ansprüche 1 bis 9, in Form einer Einrichtung mit einer Gehäuseanordnung (50), die eine Anzahl von Bereichen aufweist, wobei in einem ersten Bereich (51) ein Motor (M) und/oder in einem zweiten Bereich (52) ein vom Motor (M) antreibbarer Luftverdichter (21) und/oder in einem mit dem zweiten Bereich (52) über eine Druckquellen-Schnittstelle (E1) verbundenen dritten Bereich (53) der Lufttrockner (22) und die Entlüftungsventilanordnung (EVA) angeordnet ist, wobei der Trockenbehälter (58) einen Teil der Gehäuseanordnung (50) bildet.

11. Druckluftversorgungsanlage (DLVA, 10, 10') nach Anspruch 10,
**dadurch gekennzeichnet, dass** die Gehäuseanordnung (50) einen dichtungsaufnehmenden Deckel (T) aufweist und die Einbuchtung (G) mit dem Deckel (T, T') verschlossen ist.

12. Druckluftversorgungsanlage (DLVA, 10, 10') nach Anspruch 10 oder 11 **dadurch gekennzeichnet, dass** ein Deckel (T, T') des Trockenbehälters (58) einen wenigstens teilweise, insbesondere durch eine einzige Formdichtung (71), in pneumatische Leitungen (72) unterteilten Entlüftungsbereich aufweist.

13. Druckluftversorgungsanlage (DLVA, 10, 10') nach einem der Ansprüche 10 bis 12,
**dadurch gekennzeichnet, dass** ein Deckel (T') eine Anzahl von Deckelplatten aufweist, wobei eine erste Deckelplatte (T1) ein pneumatisches Funktionsmittel aufweist, das ausgewählt ist aus der Gruppe bestehend aus: eine pneumatische Leitung (72), eine Formdichtung (71), eine pneumatische Entlüftungs-Schnittstelle (E3) od. dgl.;
und/oder
eine zweite Deckelplatte (T2) ein elektrisches und/oder steuerelektrisches Funktionsmittel aufweist, das ausgewählt ist aus der Gruppe bestehend aus: eine elektrische Steuerleitung (65) und/oder wenigstens eine Steuerschnittstelle (S) od. dgl.; insbesondere eine Logikeinheit und/oder Sensorik zur Ausbildung eines Regelsystems, z. B. zur Niveauregelung.

14. Druckluftversorgungsanlage (DLVA, 10, 10') nach einem der Ansprüche 10 bis 13,
**dadurch gekennzeichnet, dass** eine Steuerleitung (65) zu einer Steuerschnittstelle (S) der zweiten Deckelplatte (T2) durch die erste Deckelplatte (T1) hindurchgeführt ist und Steuersignale und/oder Sensorsignale der Steuerleitung wenigstens über einen Steueranschluss (S') der zweiten Deckelplatte (T2) führbar sind.

15. Pneumatisches System (100, 100') mit der Druckluftversorgungsanlage (DLVA, 10, 10') nach einem der Ansprüche 1 bis 14 und mit einer Pneumatikanlage (90), insbesondere einer Luftfederanlage.

## Claims

1. Compressed air supply installation (DLVA, 10, 10') for operating a pneumatic system (90), particularly a vehicle air suspension system, comprising:
- an air supply (0) and an air compressor (21) for supplying a compressed air supply (1) with compressed air,
- a pneumatic connection, particularly a venting line (30), with a vent valve arrangement (EVA), particularly in the form of a controllable solenoid valve arrangement (40, 40', 400, 400', 40. 1, 40.2) and a vent port (3) for venting air, and
- a pneumatic connection, particularly a compressed air supply line (20), with an air drier (22) and a compressed air connection (2) for supplying the pneumatic system (90) with compressed air, wherein the air drier (22) exhibits a drying container (58) containing a drying agent through which compressed air can flow,
**characterized in that**
the drying container (58) exhibits a wall (W) forming a recess (G) free from drying agent and the vent valve arrangement (EVA) is arranged at least partly in the recess (G).

2. Compressed air supply installation (DLVA, 10, 10') according to Claim 1, **characterized in that** the vent valve arrangement (EVA) exhibits a valve housing, which is formed at least partially by the wall (W) and/or a casing tube (70).

3. Compressed air supply installation (DLVA, 10, 10') according to Claim 1 or 2, **characterized in that** the vent valve arrangement (EVA) is created in the form of a controllable solenoid valve arrangement (40, 40', 400, 400', 40.1, 40.2) having a solenoid part (43, 43') and a pneumatic part (44, 44'), wherein the pneumatic part (44, 44') and/or the solenoid part (43, 43') are at least partially arranged in the recess (G).

4. Compressed air supply installation (DLVA, 10, 10') according to one of the Claims 1 to 3, **characterized in that** the recess (G) is arranged symmetrically, particularly parallel and/or coaxially, to an axis (X) of the drying container (58).

5. Compressed air supply installation (DLVA, 10, 10') according to one of the Claims 1 to 4, **characterized in that** the recess (G) connects to a free space (67) without any fittings upstream of the vent valve arrangement (EVA), wherein the free space (67) and the vent valve arrangement (EVA) are arranged coaxially to the axis (X) of the drying container (58).

6. Compressed air supply installation (DLVA, 10, 10') according to one of the Claims 1 to 5, **characterized in that** the vent valve arrangement (EVA) is designed as a controllable solenoid valve arrangement (40, 40', 400, 400', 40.1, 40.2) for the direct connection of a compressed air volume, particularly from a free space (67) without any fittings.

7. Compressed air supply installation (DLVA) according to one of the Claims 1 to 6, **characterized in that** the vent valve arrangement (EVA) is created in the form of a controllable solenoid valve arrangement (400, 40.1, 40.2) with a primary valve (41) and a secondary valve (42), wherein the primary valve (41) and the secondary valve (42) can be activated using a common control means of the solenoid part of the solenoid valve arrangement (400, 40.1, 40.2) acting on both.

8. Compressed air supply installation (10, 10') according to one of the Claims 1 to 6, **characterized in that** the vent valve arrangement (EVA) is created in the form of a controllable solenoid valve arrangement (400') with a single armature (61').

9. Compressed air supply installation (DLVA, 10, 10') according to one of the Claims 1 to 8, **characterized in that** the solenoid valve arrangement (40, 40', 400, 400', 40.1, 40.2) exhibits a valve seat (61C, 61'C, 62C) made of elastomer and/or an armature (61B, 61', 62B) or a valve seat made of metal (61C, 61'C, 62C) and/or an armature (61B, 61', 62B).

10. Compressed air supply installation (DLVA, 10, 10') according to one of the Claims 1 to 9, in the form of a mechanism with a housing arrangement (50) which comprises a number of sections, wherein in a first section (51) a motor (M) and/or in a second section (52) an air compressor (21) that can be driven by the motor (M) and/or in a third section (53) connected to the second section (52) via a pressure sources interface (E1) the air drier (22) and the vent valve arrangement (EVA) are disposed, wherein the drying container (58) forms part of the housing arrangement (50).

11. Compressed air supply installation (DLVA, 10, 10') according to Claim 10, **characterized in that** the housing arrangement (50) exhibits a cover (T) housing a seal and the recess (G) is closed off by the cover (T, T').

12. Compressed air supply installation (DLVA, 10, 10') according to Claim 10 or 11, **characterized in that** a cover (T, T') of the drying container (58) exhibits a venting section at least partially divided into pneumatic lines (72), particularly by a single molded seal (71).

13. Compressed air supply installation (DLVA, 10, 10') according to one of the Claims 10 to 12,
**characterized in that** a cover (T') comprises a number of cover panels, wherein a first cover panel (T1) exhibits a pneumatic functional means, which is selected from the group comprising: a pneumatic line (72), a molded seal (71), a pneumatic vent interface (E3) or similar;
and/or
a second cover panel (T2) exhibits an electrical and/or control-electrical functional means, which is selected from the group comprising: an electrical control line (65) and/or at least one control interface (S) or similar; particularly a logic unit and/or sensor system to create a control system, e.g. a level control.

14. Compressed air supply installation (DLVA, 10, 10') according to one of the Claims 10 to 13,
**characterized in that** a control line (65) to a control interface (S) of the second cover panel (T2) is conducted through the first cover panel (T1) and control signals and/or sensor signals from the control line can at least be passed on via a control connection (S') in the second cover panel (T2).

15. Pneumatic system (100, 100') having the compressed air supply system (DLVA, 10, 10') according to one of the Claims 1 to 14 and having a pneumatic system (90), particularly an air suspension system.

## Revendications

1. Installation d'alimentation en air comprimé (DLVA, 10, 10') pour faire fonctionner une installation pneumatique (90), en particulier une installation de ressort pneumatique d'un véhicule, présentant :
- une amenée d'air (0) et un compresseur d'air (21) pour l'alimentation en air comprimé d'une amenée d'air comprimé (1),
- une liaison pneumatique, en particulier une conduite de désaérage (30), comprenant un agencement de soupape de désaérage (EVA), en particulier sous la forme d'un agencement d'électrovanne commandable (40, 40', 400, 400', 40.1, 40.2) et un raccord de désaérage (3) pour l'évacuation d'air, et
- une liaison pneumatique, en particulier une conduite d'alimentation en air comprimé (20), comprenant un sécheur d'air (22) et un raccord d'air comprimé (2) pour l'alimentation en air comprimé de l'installation pneumatique (90), le sécheur d'air (22) présentant un récipient de séchage (58) pouvant être parcouru par de l'air comprimé et contenant un agent dessiccatif,
**caractérisée en ce que**
le récipient de séchage (58) présente une paroi (W) formant un renfoncement (G) exempt d'agent dessiccatif et l'agencement de soupape de désaérage (EVA) est disposé au moins en partie dans le renfoncement (G).

2. Installation d'alimentation en air comprimé (DLVA, 10, 10') selon la revendication 1,
**caractérisée en ce que** l'agencement de soupape de désaérage (EVA) présente un boîtier de soupape formé au moins en partie par la paroi (W) et/ou par un tube d'enveloppe (70).

3. Installation d'alimentation en air comprimé (DLVA, 10, 10') selon la revendication 1 ou 2, **caractérisée en ce que** l'agencement de soupape de désaérage (EVA) est réalisé sous la forme d'un agencement d'électrovanne commandable (40, 40', 400, 400', 40.1, 40.2) avec une partie magnétique (43, 43') et une partie pneumatique (44, 44'), la partie pneumatique (44, 44') et/ou la partie magnétique (43, 43') étant disposées au moins en partie dans le renfoncement (G).

4. Installation d'alimentation en air comprimé (DLVA, 10, 10') selon l'une quelconque des revendications 1 à 3,
**caractérisée en ce que** le renfoncement (G) est disposé de manière symétrique, en particulier parallèlement et/ou coaxialement à un axe (X) du récipient de séchage (58).

5. Installation d'alimentation en air comprimé (DLVA, 10, 10') selon l'une quelconque des revendications 1 à 4,
**caractérisée en ce que** le renfoncement (G) se raccorde à un espace libre (67) exempt de pièces rapportées, disposé en amont de l'agencement de soupape de désaérage (EVA), l'espace libre (67) et l'agencement de soupape de désaérage (EVA) étant disposés coaxialement sur l'axe (X) du récipient de séchage (58).

6. Installation d'alimentation en air comprimé (DLVA, 10, 10') selon l'une quelconque des revendications 1 à 5,
**caractérisée en ce que** l'agencement de soupape de désaérage (EVA) est réalisé sous forme d'agencement d'électrovanne commandable (40, 40', 400, 400', 40.1, 40.2) pour le branchement direct d'un volume d'air comprimé, en particulier provenant d'un espace libre (67) exempt de pièces rapportées.

7. Installation d'alimentation en air comprimé (DLVA) selon l'une quelconque des revendications 1 à 6, **caractérisée en ce que** l'agencement de soupape de désaérage (EVA) est réalisé sous la forme d'un agencement d'électrovanne commandable (400, 40.1, 40.2) avec une soupape primaire (41) et une soupape secondaire (42), la soupape primaire (41) et la soupape secondaire (42) pouvant être actionnées avec un moyen de commande de l'agencement d'électrovanne (400, 40.1, 40.2) agissant en commun sur les deux.

8. Installation d'alimentation en air comprimé (10, 10') selon l'une quelconque des revendications 1 à 6,
**caractérisée en ce que** l'agencement de soupape de désaérage (EVA) est réalisé sous la forme d'un agencement d'électrovanne commandable (400') avec un induit unique (61').

9. Installation d'alimentation en air comprimé (DLVA, 10, 10') selon l'une quelconque des revendications 1 à 8,
**caractérisée en ce que** l'agencement d'électrovanne commandable (40, 40', 400, 400', 40.1, 40.2) présente un siège de soupape (61C, 61'C, 62C) et/ou un induit (61B, 61', 62B) formé en élastomère ou un siège de soupape (61C, 61'C, 62C) et/ou un induit (61B, 61', 62B) formé en métal.

10. Installation d'alimentation en air comprimé (DLVA, 10, 10') selon l'une quelconque des revendications 1 à 9,
sous la forme d'un dispositif comprenant un agencement de boîtier (50) qui présente une pluralité de régions, un moteur (M) étant disposé dans une première région (51) et/ou un compresseur d'air (21) pouvant être entraîné par le moteur (M) étant disposé dans une deuxième région (52) et/ou le sécheur d'air (22) et l'agencement de soupape de désaérage (AVA) étant disposés dans une troisième région (53) connectée à la deuxième région (52) par le biais d'une interface de source de pression (E1), le récipient de séchage (58) formant une partie de l'agencement de boîtier (50).

11. Installation d'alimentation en air comprimé (DLVA, 10, 10') selon la revendication 10,
**caractérisée en ce que** l'agencement de boîtier (50) présente un couvercle (T) recevant un joint d'étanchéité et le renfoncement (G) est fermé avec le couvercle (T, T').

12. Installation d'alimentation en air comprimé (DLVA, 10, 10') selon la revendication 10 ou 11, **caractérisée en ce qu'**un couvercle (T, T') du récipient de séchage (58) présente une région de désaérage divisée au moins en partie, en particulier par un joint d'étanchéité façonné unique (71), en conduites pneumatiques (72).

13. Installation d'alimentation en air comprimé (DLVA, 10, 10') selon l'une quelconque des revendications 10 à 12,
**caractérisée en ce qu'**un couvercle (T') présente une pluralité de plaques de couvercle, une première plaque de couvercle (T1) présentant un moyen fonctionnel pneumatique qui est sélectionné parmi le groupe formé par : une conduite pneumatique (72), un joint d'étanchéité façonné (71), une interface de désaérage pneumatique (E3) ou similaire ;
et/ou
une deuxième plaque de couvercle (T2) présente un moyen fonctionnel électrique et/ou de commande électrique qui est sélectionné parmi le groupe formé par : une conduite de commande électrique (65) et/ou au moins une interface de commande (S) ou similaire ; en particulier une unité logique et/ou un système de capteur pour réaliser un système de réglage, par exemple pour une régulation de niveau.

14. Installation d'alimentation en air comprimé (DLVA, 10, 10') selon l'une quelconque des revendications 10 à 13,
**caractérisée en ce qu'**une conduite de commande (65) est guidée à travers la première plaque de couvercle (T1) jusqu'à une interface de commande (S) de la deuxième plaque de couvercle (T2) et des signaux de commande et/ou des signaux de capteur de la conduite de commande peuvent être acheminés au moins par le biais d'un raccord de commande (S') à la deuxième plaque de couvercle (T2).

15. Système pneumatique (100, 100') comprenant l'installation d'alimentation en air comprimé (DLVA, 10, 10') selon l'une quelconque des revendications 1 à 14 et comprenant une installation pneumatique (90), en particulier une installation de ressort pneumatique.
